(19) Europäisches Patentamt
European Patent Office
Office européen des brevets

(11) **EP 1 610 040 B1**

(12) **EUROPEAN PATENT SPECIFICATION**

(45) Date of publication and mention
of the grant of the patent:
**13.08.2014 Bulletin 2014/33**

(51) Int Cl.:
*F16H 61/42* (2010.01)     *F16H 61/462* (2010.01)
*F16H 61/4157* (2010.01)     *F16H 61/431* (2010.01)

(21) Application number: **04721287.3**

(22) Date of filing: **17.03.2004**

(86) International application number:
**PCT/JP2004/003572**

(87) International publication number:
**WO 2004/083689 (30.09.2004 Gazette 2004/40)**

(54) **HYDRAULIC TRAVEL DRIVE DEVICE AND MOTOR VEHICLE WITH HYDRAULIC TRAVEL DRIVE**

HYDRAULISCHE FAHRANTRIEBSVORRICHTUNG UND KRAFTFAHRZEUG MIT HYDRAULISCHER FAHRANTRIEBSVORRICHTUNG

TRANSMISSION HYDRAULIQUE ET VEHICULE EN ETANT EQUIPE

(84) Designated Contracting States:
**AT BE BG CH CY CZ DE DK EE ES FI FR GB GR HU IE IT LI LU MC NL PL PT RO SE SI SK TR**

(30) Priority: **18.03.2003   JP 2003072929**
**31.03.2003   JP 2003096035**
**30.04.2003   JP 2003125133**
**26.05.2003   JP 2003147679**

(43) Date of publication of application:
**28.12.2005 Bulletin 2005/52**

(73) Proprietor: **Kobelco Cranes Co., Ltd.**
**Tokyo 141-8626 (JP)**

(72) Inventors:
• **YAMAZAKI, Yoichiro,**
**Kobelco Construction Machinery**
**Akashi-shi, Hyogo 6740063 (JP)**
• **SHIMOMURA, Koichi,**
**Kobelco Construction Machinery**
**Akashi-shi, Hyogo 6740063 (JP)**
• **NAKATSUKA, Masanao,**
**Kobelco Construction Machinery**
**Akashi-shi, Hyogo 6740063 (JP)**

(74) Representative: **TBK**
**Bavariaring 4-6**
**80336 München (DE)**

(56) References cited:
EP-A2- 0 339 202     DE-A1- 19 858 673
DE-U1- 9 318 017     JP-A- 4 136 555
JP-A- 4 136 555     JP-A- 5 248 511
JP-A- 6 265 013     JP-A- 8 014 384
JP-A- 8 014 384

**Description**

TECHNOLOGICAL FIELD

The present invention relates to a hydraulic travel drive apparatus for driving the travel of an operation vehicle or the like by a hydraulic pressure.

BACKGROUND TECHNOLOGY

In recent years, a travel drive apparatus with an HST (hydrostatic transmission) has been developed as means for letting an operation vehicle such as a wheel loader and a self-traveling excavator travel by a hydraulic pressure.

For example, Japanese Unexamined Patent Publication No. H06-265013 discloses a travel drive apparatus according to the preamble of claim 1 in which a closed circuit is formed by a variable displacement-type hydraulic pump driven by an engine and a hydraulic motor coupled to travel wheels through a transmission, and which includes a capacity-operating hydraulic pump for increasing a discharge pressure as the speed of the engine increases and a regulator for switching the capacity of the variable displacement-type hydraulic pump upon receiving the hydraulic pressure outputted from this capacity-operating hydraulic pump such that the higher the outputted hydraulic pressure, the higher the capacity of the variable displacement-type hydraulic pump.

According to this apparatus, the capacity of the variable displacement-type hydraulic pump is operated as the speed of the engine changes, thereby realizing continuously variable transmission by the hydrostatic pressure. Further, the change gear ratio of the transmission provided between the hydraulic motor and the travel wheels is switched (for example, switched in two stages between a high-speed range and a low-speed range), whereby it becomes possible to considerably extend the range of a speed-output horsepower performance.

However, in this apparatus, the speed of the travel wheels does not immediately decrease due to the inertia of the vehicle when the transmission is switched from the high-speed range to the low-speed range (i.e. a ratio of the rotating speed of the hydraulic motor to the rotating speed of the travel wheels is reduced). Thus, the rotating speed of the hydraulic motor temporarily increases. This suddenly increases the discharge pressure of the hydraulic motor, thereby creating a braking pressure, wherefore an operator feels discomfort. If the pressure increases to an excessive extent, it may lead to reduced lives and damages of the hydraulic devices.

As means for solving such an inconvenience at the time of switching to the low-speed range, Japanese Unexamined Patent Publication No. H05-248511 discloses a travel drive apparatus in which a variable displacement-type hydraulic pump and a hydraulic motor for travel construct a closed circuit similar to the apparatus disclosed in Japanese Unexamined Patent Publication No. H06-265013, wherein a relief valve having an operable relief setting pressure is provided in a bypass passage bypassing a discharge pipe and an intake pipe of the hydraulic pump, and a controller is provided to gradually increase the set pressure of the relief valve after temporarily reducing it when a transmission disposed between the hydraulic motor and travel wheels is switched from a high-speed range to a low-speed range. However, there is a limit in taking up an increase in the pressure of the hydraulic motor at the discharge side by increasing the relief flow rate, and the set pressure of the relief valve has to be kept reduced for a relatively longer period in order to take up such an increase. Thus, a state where a circuit pressure is reduced, i.e. a state where a rate of deceleration is reduced and the vehicle speed hardly decreases continues for a while when the transmission is switched to the low-speed range.

On the other hand, since an operator generally switches the transmission to the low-speed range (shift-down operation) in order to increase the rate of deceleration, the continuation of the state where the rate of deceleration is reduced and the vehicle speed hardly decreases regardless of the shift-down operation is against the operator's intension, wherefore the operator may feel considerable discomfort.

Further, according to this method, excessive energy created by an increase of the speed of the hydraulic motor is almost converted into heat energy by the relief operation. Thus, temperature in the closed circuit formed by the hydraulic motor and the variable displacement-type hydraulic pump may suddenly increase to reduce a life of the circuit device.

An object of the present invention is to solve the above problems.

DISCLOSURE OF THE INVENTION

In order to solve the above problems, the invention adopts the following construction.

Specifically, the invention is directed to a hydraulic travel drive apparatus, comprising a closed circuit including a variable displacement-type hydraulic pump driven by an engine and a hydraulic motor coupled to travel wheels of a vehicle via a transmission; and capacity operating means for increasing the capacity of the variable displacement-type hydraulic pump as the speed of the engine increases, wherein the capacity operating means includes capacity increasing means for temporarily making the capacity of the variable displacement-type hydraulic pump larger at the time of switching the transmission from a high-speed range to a low-speed range than in other operating conditions.

With this construction, an increase of the motor discharge flow rate due to a sudden increase of the motor rotating speed resulting from the switch to the low-speed range can be taken up in the form of engine braking through the rotation of the variable displacement-type hydraulic pump since the capacity of the variable displacement-type hydraulic pump or the pump take-up flow rate is temporarily increased at the time of the switch to the low-speed range. In other words, an increased amount of energy due to the sudden increase of the motor rotating speed can be effectively taken up using the drive torque of the engine.

At this time, deceleration temporarily decreases, which may lead to a situation where the vehicle speed hardly decelerate. However, unlike the prior art in which the flow is taken up by a relief operation, it is sufficient for a time required to take up this flow to be substantially as short as a speed transition period from the high-speed range to the low-speed range and there is almost no likelihood of letting an operator feel discomfort. Further, since the engine braking is taken advantage of, temperature is unlikely to increase in the closed circuit and there is no likelihood of damaging hydraulic devices and the like.

The timing of increasing the pump capacity may sufficiently correspond to the timing of switching to the low-speed range. More preferably, an increase of the capacity of the variable displacement-type hydraulic pump is started at or before a timing of switching the transmission from the high-speed range to the low-speed range and stopped at the end of the switch to the low-speed range or upon the lapse of a specified period after the end of the switch.

By setting the increasing period as above, the pump capacity is invariably increased during the switching period to the low-speed range. Thus, the effect of taking up the motor discharge flow at the time of the switch to the low-speed range can be better ensured.

In order to stop increasing the pump capacity, this capacity may be suddenly decreased, for example. However, if this capacity is gradually decreased, the operating condition can be more smoothly transitioned to the normal operating condition.

In the present invention, the capacity operating means preferably includes, for example, a regulator for increasing the capacity of the variable displacement-type hydraulic pump upon receiving the supply of a hydraulic pressure such that the higher the hydraulic pressure, the larger the capacity; a hydraulic pressure source for supplying the hydraulic pressure to the regulator, a pressure-reducing valve provided between the hydraulic pressure source and the regulator for reducing the hydraulic pressure supplied from the hydraulic pressure source to a pressure corresponding to a command signal inputted thereto and introducing the reduced hydraulic pressure to the regulator, and pressure controlling means for inputting the command signal to the pressure-reducing valve such that the secondary pressure of the pressure-reducing valve increases as the speed of the engine increases, wherein the pressure controlling means includes pressure increasing means for temporarily making the secondary pressure of the pressure-reducing valve larger at the time of switching the transmission from the high-speed range to the low-speed range than in other normal operating conditions.

With this construction, a characteristic between the speed of the engine and the secondary pressure of the pressure-reducing valve, i.e. a characteristic between the engine speed and the pump capacity can be freely set. By setting such a characteristic, it can be made possible to improve the mileage and to fully utilize the running performance. Further, the pump capacity can be temporarily increased in a suitable manner at the time of the switch to the low-speed range by a simple control operation of only temporarily increasing the secondary pressure.

Further, if the pressure controlling means has a plurality of characteristics as those of the command signal for the speed of the engine saved therein, selects the characteristic corresponding to an operating condition of the vehicle out of these characteristics, and determines the command signal in accordance with the selected characteristic, the pump capacity control better matching an actual operating condition can be performed by selecting this characteristic.

More preferably, the capacity operating means includes a capacity operating hydraulic pump as another hydraulic pressure source different from the hydraulic pressure source connected with the pressure-reducing valve, the hydraulic pump being connected with an output shaft of the engine to increase a discharge pressure thereof as the speed of the engine increases; and a higher pressure selecting portion for introducing a higher one of a hydraulic pressure supplied from the capacity operating hydraulic pump and a hydraulic pressure supplied from a secondary side of the pressure-reducing valve to the regulator, wherein a characteristic of the secondary pressure of the pressure-reducing valve is set such that the secondary pressure of the pressure-reducing valve is constantly higher than the hydraulic pressure supplied from the capacity operating hydraulic pump.

With this construction, since the hydraulic pressure supplied from the secondary side of the pressure-reducing valve exceeds the one supplied from the capacity operating hydraulic pump to the higher pressure selecting portion when the pressure-reducing valve is in a normal state, the former hydraulic pressure is constantly selected and introduced to the regulator. In other words, the capacity control by the pressure-reducing valve is executed. On the other hand, if the pressure-reducing valve experiences an operation abnormality and the secondary pressure thereof abnormally decreases, the hydraulic pressure supplied from the capacity operating hydraulic pump is selected and introduced to the regulator. Thus, a normal travel drive can be continued regardless of the trouble of the pressure-reducing valve or the like.

In the present invention, the capacity operating means may include a capacity operating hydraulic pump which is coupled to an output shaft of the engine and whose discharge pressure increases as the speed of the engine increases; and a regulator for operating the capacity of the variable displacement-type hydraulic pump upon receiving the supply of the hydraulic pressure from the capacity operating hydraulic pump and increasing the capacity such that the higher the hydraulic pressure, the larger the capacity, and the capacity operating means may further include, as the capacity increasing means, a high pressure source for supplying a hydraulic pressure higher than the capacity operating hydraulic pump; hydraulic pressure supply switching means for switching to a state where the hydraulic pressure is supplied from the capacity operating hydraulic pump to the regulator and to a state where the hydraulic pressure is supplied from the high pressure source to the regulator; and switch controlling means for switching the hydraulic supply switching means to the state where the hydraulic pressure is supplied from the high pressure source to the regulator at the time of switching the transmission from the high-speed range to the low-speed range while switching the hydraulic supply switching means to the state where the hydraulic pressure is supplied from the capacity operating hydraulic pump to the regulator in the other operating conditions.

With this construction, the hydraulic pressure supplied from the capacity operating hydraulic pump is introduced to the regulator to operate the pump capacity of the variable displacement-type hydraulic pump in normal operating conditions other than the one at the time of the switch to the low-speed range. On the other hand, the hydraulic pressure outputted from the high pressure source, i.e. the hydraulic pressure higher than the one supplied from the capacity operating hydraulic pump is introduced to the regulator to temporarily increase the pump capacity of the variable displacement-type hydraulic pump at the time of the switch to the low-speed range.

Specifically, the hydraulic pressure supply switching means preferably includes a switching valve switchable to a permitting state where the supply of the hydraulic pressure from the high pressure source to the regulator is permitted and a shutoff state where this supply is shut off, and a higher pressure selecting portion for introducing a higher one of the hydraulic pressure outputted from the switching valve and the hydraulic pressure supplied from the capacity operating hydraulic pump to the regulator, wherein the switch controlling means switches the switching valve to the permitting state at the time of switching the transmission from the high-speed range to the low-speed range while switching the switching valve to the shutoff state in the other operating conditions.

With this construction, since the supply of the hydraulic pressure from the high pressure source is shut off by the switching valve in normal operating conditions other than the one at the time of the switch to the low-speed range, the hydraulic pressure supplied from the capacity operating hydraulic pump is selected as a higher pressure and introduced to the regulator to operate the pump capacity of the variable displacement-type hydraulic pump. On the other hand, the supply of the hydraulic pressure from the high pressure source to the higher pressure selecting portion is permitted at the time of the switch to the low-speed range, and this hydraulic pressure is selected as a higher pressure and introduced to the regulator. Since this hydraulic is higher than the one supplied from the capacity operating hydraulic pump, the pump capacity of the variable displacement-type hydraulic pump can be temporarily increased.

Preferably, a variable displacement-type hydraulic motor is provided as the hydraulic motor; the apparatus further comprises a regulator for controlling the capacity of the variable displacement-type hydraulic motor and controlling means for controlling the operation of the regulator; and the controlling means operates the regulator in such a direction as to increase a motor capacity when an operator performs an auxiliary braking operation to effect auxiliary braking. With this construction, when the operator performs the auxiliary braking operation during deceleration, the motor capacity increases by the action of the controlling means to increase the outflow rate from the hydraulic motor, wherefore a braking pressure is produced at the exit side of the motor. In this way, a larger braking force than at the time of the normal travel acts by the original braking action caused by the capacity decrease of the hydraulic pump based on the deceleration operation and the braking action (auxiliary braking action) caused by the increase of the motor capacity, and is converted into a torque in the pump to be transmitted to the engine. Thus, deceleration acts at a larger rate. Accordingly, the auxiliary braking function can be obtained in the HST vehicle similar to general heavy vehicles. Further, since the auxiliary braking action is effected utilizing the original action of the HST vehicle to increase the capacity of the hydraulic motor and the action of the engine to take up the torque, additional equipment and remodeling can be less costly.

Specifically, the controlling means preferably includes auxiliary braking operation detecting means for detecting the auxiliary braking operation and a controller for outputting an operation command signal to operate the regulator in such a direction as to increase the motor capacity when the auxiliary braking operation is detected by the auxiliary braking operation detecting means.

Preferably, the auxiliary braking operation detecting means detects an operated amount of an accelerator for governing the speed of the engine, and the controller outputs the operation command signal by assuming that the auxiliary braking operation was performed when a decreasing rate of the detected operated amount of accelerator becomes equal to or above a set value.

Alternatively, the auxiliary braking operation detecting means may detect an operated amount of an accelerator for governing the speed of the engine, and the controlling means may output the operation command signal by assuming that the auxiliary braking operation was performed when the detected operated amount of accelerator becomes equal to or below a set value. Further, the auxiliary braking operation detecting means may detect a braking operation, and the controlling means may output the operation command signal by assuming that the auxiliary braking operation was performed when the braking operation was detected.

The hydraulic travel drive apparatus may further comprise auxiliary braking selecting means, and the controlling means may operate the regulator in such a direction as to increase the motor capacity on the condition that the auxiliary braking was selected by the auxiliary braking selecting means. With this construction, since the auxiliary braking acts only when the auxiliary braking selecting means selected the auxiliary braking (e.g. when a switch is turned on), there can be made a selection conforming to the running condition, the operator's preference and the like such as a selection to obtain a smooth running condition without causing the auxiliary braking to act on a flat road.

If the controlling means causes the exhaust brake of the engine to act when the auxiliary braking operation was performed, an even larger deceleration rate can be obtained by concomitantly using the exhaust brake used in general heavy vehicles during the travel on a steep and long downward slope or the like.

Further, if the controlling means turns a brake warning lamp on simultaneously when causing the regulator to operate in such a direction as to increase the motor capacity, the brake warning lamp is turned on while the auxiliary braking is effected. Thus, a danger of a rear-end collision can be avoided by showing that a largely decelerating state to a vehicle running behind during the travel on a highway.

In the present invention, the hydraulic travel drive apparatus more preferably further comprises abnormality detecting means for detecting abnormality in the capacity operation by the capacity operating means, and decoupling means for decoupling the hydraulic motor and the travel wheels when the abnormality in the capacity operation was detected by the abnormality detecting means.

With this construction, even if a surprising incident occurs in the capacity of the variable displacement-type hydraulic pump due to the abnormality of the capacity operation, the hydraulic motor and the travel wheels are decoupled, thereby avoiding an abnormal increase of the circuit pressure at the hydraulic motor discharge side. Thus, the sudden stop of the vehicle and damages of devices resulting from such an abnormal increase can be effectively restrained. Therefore, this construction is particularly effective for wheel cranes and wheel shovels which have large inertial masses and run on express highways.

Preferably, the capacity operating means includes a regulator for operating the capacity of the variable displacement-type hydraulic pump by receiving the supply of the hydraulic pressure; a hydraulic pressure source for supplying the hydraulic pressure to the regulator; a switching valve having, as switched positions, a permitting position for permitting the supply of the hydraulic pressure from the high pressure source to the regulator and a shutoff position for shutting off the supply of the hydraulic pressure; and switch operating means for switching the switching valve by inputting a command signal, wherein the switching valve is held at the present position thereof when the input of the command signal ceases. With this construction, even if the input of the command signal to the switching valve ceases, the operating position of the switching valve is held at the present position. This can prevent the pump capacity from suddenly changing due to an input abnormality of the command signal, thereby avoiding incontinences resulting therefrom.

The present invention is also directed to a hydraulic travel vehicle, comprising a lower traveling body, an upper rotating body rotatably installed on the lower traveling body, and a hydraulic travel drive apparatus as an apparatus for driving the lower traveling body.

Preferably, in this hydraulic travel vehicle, the upper rotating body includes a travel hydraulic pump and an operation hydraulic pump as the variable displacement-type hydraulic pump, an operation circuit for driving an operation hydraulic actuator using the operation hydraulic pump as a hydraulic pressure source, an oil tank and an oil cooler for cooling the hydraulic oil returning from the operation circuit to the oil tank; the lower traveling body includes the hydraulic motor as a travel driving source; the hydraulic motor and the travel hydraulic pump are connected via a swivel joint to form a travel circuit as a closed circuit; a drain pipe for directly returning a drain oil of the travel circuit to the oil tank and an oil resupply pump for resupplying the hydraulic oil to the travel circuit from the oil tank are further provided; and the hydraulic oil discharged from the operation hydraulic pump is circulated between the operation circuit and the oil tank by way of the oil cooler and the hydraulic oil in the oil tank is resupplied to the travel circuit by the oil resupply pump during the travel. With this construction, since the drain oil of the travel circuit is directly returned to the oil tank, the entire length of the drain pipe can be minimized as compared to the known technology of temporarily storing the hydraulic oil in a motor casing or a pump casing. Accordingly, a back pressure in the drain pipe can be suppressed to prevent damages of the respective devices. Further, the operation hydraulic pump is driven during the travel to circulate the hydraulic oil of the operation circuit by way of the oil cooler, whereby the cooled oil is resupplied to the travel circuit by the resupply pump. Therefore, the oil temperature of the travel circuit can be reduced to efficiently cool the travel circuit. Further, since the resupplied oil is cooled using the operation hydraulic pump, it is more advantageous in terms of costs and energy efficiency as compared to a case where another pump is additionally installed.

BRIEF DESCRIPTION OF THE DRAWINGS

FIG. 1 is a hydraulic circuit diagram showing a hydraulic travel drive apparatus according to a first embodiment of the invention,

FIGS. 2A, 2B and 2C are graphs showing a command pressure of an electromagnetic proportional pressure-reducing valve and a pump capacity in relation to an engine speed in the apparatus shown in FIG. 1, a graph showing an engine output, a engine torque and an output horsepower in relation to the engine speed in the apparatus shown in FIG. 1, and a graph showing a relationship between a vehicle speed and a driving force, respectively,

FIG. 3 is a timing chart showing actions of the apparatus shown in FIG. 1 at the time of switching to a low-speed range,

FIG. 4 is a flow chart showing an example of a control operation of a controller at the time of switching to the low-speed range,

FIGS. 5A, 5B and 5C are skeleton diagrams of a transmission provided in the hydraulic travel drive apparatus showing a neutral state, a low-speed state and a high-speed state, respectively,

FIG. 6 is a circuit diagram showing the construction of the controller provided in the hydraulic travel drive apparatus,

FIG. 7 is a flow chart showing a control operation of the controller,

FIG. 8 is a circuit diagram showing the construction of the controller in the case that a pressure switch is used as abnormality detecting means,

FIG. 9 is a flow chart showing a control operation of the controller shown in FIG. 8,

FIG. 10 is a hydraulic circuit diagram showing a hydraulic travel drive apparatus according to a second embodiment of the invention,

FIG. 11 is a timing chart showing actions when the apparatus shown in FIG. 10 at the time of switching to a low-speed range,

FIG. 12 is a hydraulic circuit diagram showing a hydraulic travel drive apparatus according to a third embodiment of the invention,

FIG. 13 is a circuit diagram showing the construction of a controller provided in the apparatus shown in FIG. 12,

FIG. 14 is a flow chart showing a control operation of the controller shown in FIG. 13,

FIG. 15A is a hydraulic circuit diagram showing one example of a hydraulic travel drive apparatus in which two detent-type electromagnetic switching valves are disposed in series as switching valves provide between a regulator of a variable displacement-type hydraulic pump and a hydraulic pressure source, and FIG. 15B is a flow chart showing a control operation carried out in this apparatus,

FIG. 16A is a hydraulic circuit diagram showing one example of a hydraulic travel drive apparatus in which two detent-type electromagnetic switching valves are disposed in parallel as switching valves provide between the regulator and the hydraulic pressure source, and FIG. 16B is a flow chart showing a control operation carried out in this apparatus,

FIG. 17 is a circuit construction diagram showing a hydraulic travel drive apparatus according to a fourth embodiment of the invention,

FIG. 18 is a graph showing a pump capacity and a pump-capacity command pressure in relation to an engine speed in the fourth embodiment,

FIG. 19 is a graph showing a circuit pressure and a motor-capacity command pressure in relation to a motor capacity in the fourth embodiment,

FIG. 20 is a flow chart showing the operation of the fourth embodiment,

FIG. 21 is a circuit construction diagram showing a fifth embodiment of the invention,

FIG. 22 is a flow chart showing a pump controlling operation in the fifth embodiment, and

FIG. 23 is a circuit construction diagram showing a sixth embodiment of the invention.

BEST MODES FOR EMBODYING THE INVENTION

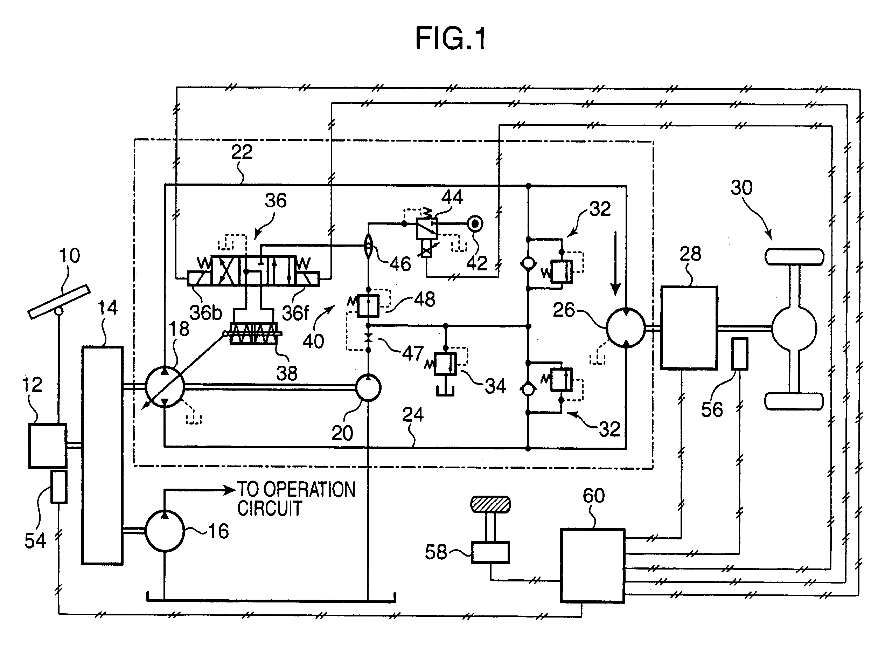

A first embodiment of the present invention is described with reference to FIGS. 1 to 4.

FIG. 1 shows a schematic construction of a vehicle including a hydraulic travel drive apparatus according to the present invention. This vehicle is provided with an engine 12 whose speed increases as pressure on an acceleration pedal 10 is increased, and the power of this engine 12 is supplied to an operation hydraulic pump 16, a variable displacement-type hydraulic pump 18 and an capacity operating hydraulic pump 20 via a power distributor 14. Accordingly, as the speed of the engine 12 increases, discharge flow rates of the respective hydraulic pumps 16, 18, 20 increase.

The variable displacement-type hydraulic pump 18 forms a closed circuit (HST circuit) together with a hydraulic motor 26. In this embodiment, the variable displacement-type hydraulic pump 18 and the hydraulic motor 26 are operable in both directions, wherein one port of the variable displacement-type hydraulic pump 18 is connected with one port of the hydraulic motor 26 via a pipe 22, and the other port of the hydraulic motor 26 is connected with the other port of the variable displacement-type hydraulic pump 18 via a pipe 24. When hydraulic oil is discharged into the pipe 22 from the variable displacement-type hydraulic pump 18, the hydraulic motor 26 is driven in the forward direction of the vehicle. Conversely, when the hydraulic oil is discharged into the pipe 24 from the variable displacement-type hydraulic pump 18, the hydraulic motor 26 is driven in the backward direction of the vehicle.

An output shaft of the hydraulic motor 26 is coupled to travel wheels 30 via a transmission 28. The transmission 28 is constructed such that a change gear ratio can be switched in a plurality of steps (two steps, high-speed range and low-speed range in this embodiment) in accordance with a change gear command signal inputted from the outside.

The pipes 22, 24 are connected with a primary side of a low-pressure relief valve 34 via overload relief valves 32 each fitted with a check valve, and a secondary side of the low-pressure relief valve 34 is connected with a tank. When the pressure of the pipe 22 or 24 reaches a specified permissible pressure, the overload relief valve 32 at the pipe side opens, whereby the pipes 22, 24 are connected to communicate with each other via this overload relief valve 32 and the check valves of the other overload relief valve 32. In this way, a maximum pressure of the circuit can be restricted.

The capacity of the variable displacement-type hydraulic pump 18 is maneuverable by means of capacity operating means 40. This capacity operating means 40 includes a regulator 38, a three-position electromagnetic switching valve 36, a high pressure source 42, an electromagnetic proportional pressure-reducing valve 44, a shuttle valve (higher pressure selecting valve) 46, a controller 60 and the capacity operating hydraulic pump 20.

The regulator 38 has a hydraulic pressure supplied thereto from the outside and increases the capacity of the variable displacement-type hydraulic pump 18 as the hydraulic pressure increases depending on a direction of the supply. Specifically, when the hydraulic pressure is supplied from a right port of FIG. 1, the capacity of the variable displacement-type hydraulic pump 18 is increased in forward direction by an amount corresponding to the supplied hydraulic pressure. When the hydraulic pressure is supplied from a left port of FIG. 1, the capacity of the variable displacement-type hydraulic pump 18 is increased in backward direction by an amount corresponding to the supplied hydraulic pressure.

It is sufficient for the high pressure source 42 to output a specified hydraulic pressure, and a hydraulic pump may be installed exclusively for this source or the operation hydraulic pump 16 may also be used as the high hydraulic pressure source 42. A specified hydraulic pressure outputted from the high pressure source 42 is supplied to the regulator 38 via the electromagnetic proportional pressure-reducing valve 44, the shuttle valve 46 and the electromagnetic switching valve 36. The discharge side of the capacity operating hydraulic pump 20 is connected with the shuttle valve 46 via a throttle 47 and a pressure-reducing valve 48.

The electromagnetic proportional pressure-reducing valve 44 is for outputting a secondary pressure proportional to a command signal inputted from the controller 60, the higher one of this secondary pressure and the hydraulic pressure outputted from the capacity operating hydraulic pump 20 via the throttle 47 and the pressure-reducing valve 48 is selected by the shuttle valve 46 and introduced to the electromagnetic switching valve 36.

The electromagnetic switching valve 36 includes solenoids 36b, 36f and the position thereof is switched to a neutral position (center position in FIG. 1) where it blocks the connection between the shuttle valve 46 and the regulator 38, a forward position (right position in FIG. 1) where the hydraulic pressure outputted from the shuttle valve 46 is introduced to a forward-side port (right port in FIG. 1) of the regulator 38, and a backward position (left position in FIG. 1) where the hydraulic pressure outputted from the shuttle valve 46 is introduced to a backward-side port (left portion in FIG. 1) of the regulator 38 in accordance with the command signal inputted from the controller 60. In other words, the direction (forward and backward) of the travel is switched by switching the position of this electromagnetic switching valve 36.

Specifically, a three-position electromagnetic switching valve of the spring centering type is used as this electromagnetic switching valve 36. The electromagnetic switching valve 36 is switched to the forward position when one 36f of the solenoids is excited; switched to the backward position when the other solenoid 36b is excited; and held at the neutral position by the force of a spring when neither one of the solenoids 36f, 36b is excited.

The controller 60 is connected with an engine speed sensor 54, a vehicle speed sensor 56, a shift lever device 58, etc, and carries out the following control operations in accordance with electrical signals inputted from these elements.

A) The controller 60 outputs a command signal to the electromagnetic switching valve 36 to switch the position of the electromagnetic switching valve 36 in accordance with a command signal inputted form the shift lever device 58. Specifically, when the lever position of the shift lever device 58 is at a neutral position, the position of the electromagnetic switching valve 36 is set at the neutral position. Likewise, when the lever position is at a forward or backward position, the position of the electromagnetic switching valve 36 is also set at the forward or backward direction.

B) The controller 60 outputs a command signal to the transmission 28 to change the gear.

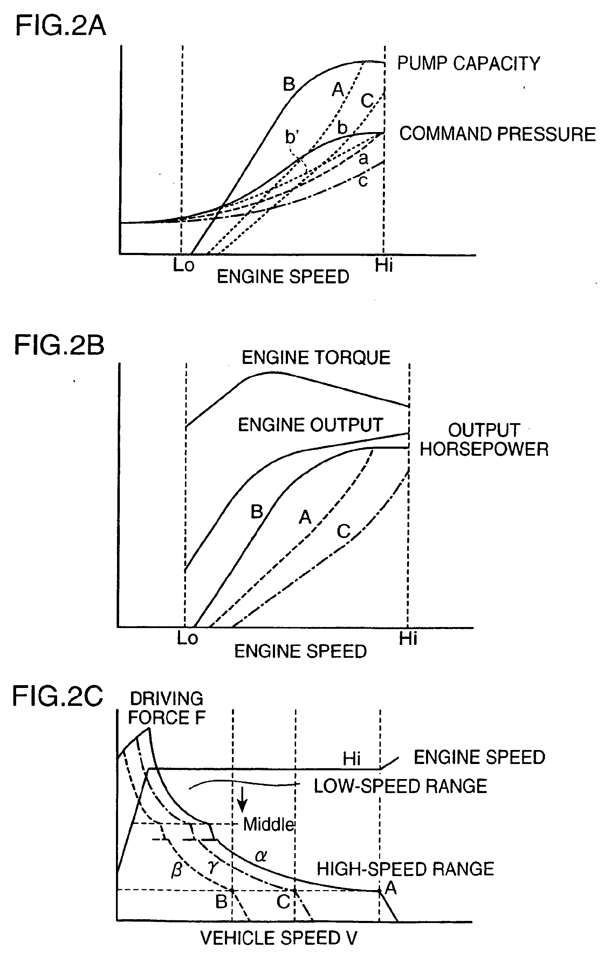

C) The controller 60 calculates a command pressure corresponding to the engine speed detected by the engine speed sensor 54, and outputs a command signal corresponding to this command pressure to the electromagnetic proportional pressure-reducing valve 44 to adjust the secondary pressure of the electromagnetic proportional pressure-reducing valve 44 to the command pressure (pressure controlling means). In this embodiment, such a characteristic as to increase the command pressure as the speed of the engine increase as shown by a curve b of FIG. 2A is saved in the controller 60, which calculates the command pressure from the engine speed based on this characteristic.

Although two characteristics shown by curves b, b' are prepared as characteristics of the engine speed and the command pressure of the electromagnetic proportional pressure-reducing valve 44 in the shown example, the number and the specific contents of the characteristics can be suitably set. For example, in place of either one of the curves b, b' or in addition to the curves b, b', characteristics at the time of hill climbing and sudden acceleration may be used.

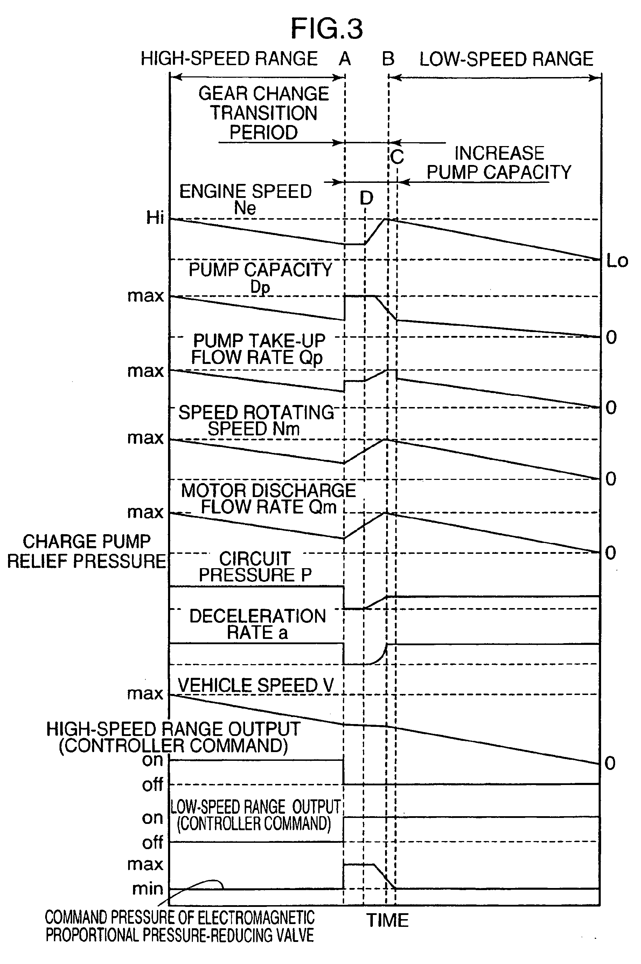

The apparatus shown in FIG. 1 is characterized in that the controller 60 is also provided with a function as pressure increasing means for setting a pressure equal to or above a maximum value of the command pressure shown by the curve b of FIG. 2A (pressure at the time of normal operation) as an actual command pressure regardless of the speed of the engine 12 upon switching the transmission 28 from the high-speed range to the low-speed range, and temporarily increasing the secondary pressure of the electromagnetic proportional pressure-reducing valve 44 (see the bottommost stage of FIG. 3).

The electromagnetic switching valve 36 may be switched by directly introducing the signal outputted from the shift lever device 58 thereto. Further, the command pressure calculated by the controller 60 is not limited to the pressure corresponding to the engine speed detected by the engine speed sensor 54, and may be a command pressure, for example, corresponding to an operated amount of the acceleration pedal.

The capacity operating hydraulic pump 20 is such that the discharge pressure thereof increases as the speed of the engine 12. increases as described. The characteristic of the pressure supplied from the hydraulic pump 20 to the shuttle valve 46 via the throttle 47 and the pressure-reducing valve 48 is represented by a curve "a" of FIG. 2A, wherein this pressure is equal to or below the command pressure of the electromagnetic proportional pressure-reducing valve 44 in the entire speed region.

A part of the hydraulic oil discharged from the capacity operating hydraulic pump 20 is distributed to the pipes 22, 24 via the check valves of the overload relief valves 32 for the resupply of the hydraulic oil in the entire circuit and for the cooling.

Next, functions of this apparatus are described.

When pressure on the acceleration pedal 10 increases, the speed of the engine 12 increases according to the operated amount of the acceleration pedal 10, which results in increases in the rotating speeds of the variable displacement-type hydraulic pump 18 and the capacity operating hydraulic pump 20. Here, when the lever position of the shift lever device 58 is at the neutral position, the electromagnetic switching valve 36 is also at the neutral position to shut off the connection between the regulator 38 and the shuttle valve 46. Accordingly, no hydraulic pressure is supplied to the regulator 38, wherefore the capacity of the variable displacement-type hydraulic pump 18 is zero and no discharge pressure is produced even if the hydraulic pump 18 is driven.

Contrary to this, when the lever position is switched, for example, to the forward position, the electromagnetic switching valve 36 is switched to the forward position (right position in FIG. 1) and the hydraulic pressure outputted from the shuttle valve 46 is supplied to the forward port (right port in FIG. 1) of the regulator 38. Upon receiving this hydraulic pressure, the regulator 38 increases the capacity of the variable displacement-type hydraulic pump 18 in forward direction. Through this capacity operation, the hydraulic oil is discharged from the variable displacement-type hydraulic pump 18 to the hydraulic motor 26 via the pipe 22 and the output shaft of the hydraulic motor 26 and the travel wheels 30 coupled to this output shaft are driven in forward direction.

Here, if there is no abnormality in the electromagnetic proportional pressure-reducing valve 44, the hydraulic pressure outputted from the electromagnetic proportional pressure-reducing valve 44 is constantly selected as a higher pressure and introduced to the regulator 38 since the secondary pressure of the electromagnetic proportional pressure-reducing valve 44 (curve b of FIG. 2A) is kept to be equal to or above the hydraulic pressure (curve "a" of FIG. 2A) supplied to the shuttle valve 46 from the capacity operating hydraulic pump 20. Accordingly, the capacity of the variable displacement-type hydraulic pump 18 is controlled based on the characteristic shown by the curve b except at the time of switching to the low-speed range as described later.

The characteristic shown by the curve b is such that the command pressure is higher than the discharge pressure of the capacity operating hydraulic pump 20 (curve "a") particularly in a middle speed region. Accordingly, a pump capacity characteristic (curve B of FIG. 2A) and an output horsepower characteristic (curve B of FIG. 2B) of the variable displacement-type hydraulic pump 18 are also better than a pump capacity characteristic (curve A of FIG. 2A) and an output horsepower characteristic (curve A of FIG. 2B) of the capacity operating hydraulic pump 20 particularly in the middle speed region. The respective characteristics of the hydraulic pump 20 may decrease, for example, to curves c, C of FIG. 2A and a curve C of FIG. 2B as the temperature of the hydraulic oil increases, whereas the respective characteristics of the electromagnetic proportional pressure-reducing valve 44 can be constantly kept at the curve b of FIG. 2A, the curve B of FIG. 2B and the curve B and, thus, running performance can be fully displayed.

Further, concerning a characteristic of a vehicle speed V and a driving force F shown in FIG. 2C, this characteristic decreases from the one shown by a curve $\alpha$ of FIG. 2C to the one shown by a curve $\beta$ as the engine speed increases if the regulator 38 is constantly operated using the capacity operating hydraulic pump 20. On the other hand, if the electromagnetic proportional pressure-reducing valve 44 is used, a decrease of this characteristic can be suppressed, for example, at about a curve γ of FIG. 2C. Thus, it is possible to further improve the mileage.

A characteristic shown by a curve b' of FIG. 2A (characteristic having a lower pressure than the one shown by the curve b, but having a higher pressure than the discharge pressure characteristic of the hydraulic pump 20 shown by the curve "a") may be saved in the controller 60 as the command pressure characteristic of the electromagnetic proportional pressure-reducing valve 44 in addition to the characteristic shown by the curve b of FIG. 2A. For example, (1) if a low-idle condition can be discriminated due to a small operated amount of the acceleration pedal 10 or (2) if a braking operation is detected, the characteristic of the curve b' may be selected on the presumption of an intension of the operator to decelerate, thereby securing a suitable braking force. In other cases, the characteristic of the curve b may be selected to improve the mileage. Then, a pump capacity control more conforming to an actual operating condition can be realized.

Further, in the shown apparatus, the hydraulic pressure from the capacity operating hydraulic pump 20 is selected as a higher pressure by the shuttle valve 46 and introduced to the regulator 38 if the electromagnetic proportional pressure-reducing valve 44 cannot output a normal secondary pressure due to the defect of its solenoid or the like. Thus, there can be obtained an effect of being able to continue the travel without any problem even at the time of the trouble of the electromagnetic proportional pressure-reducing valve 44.

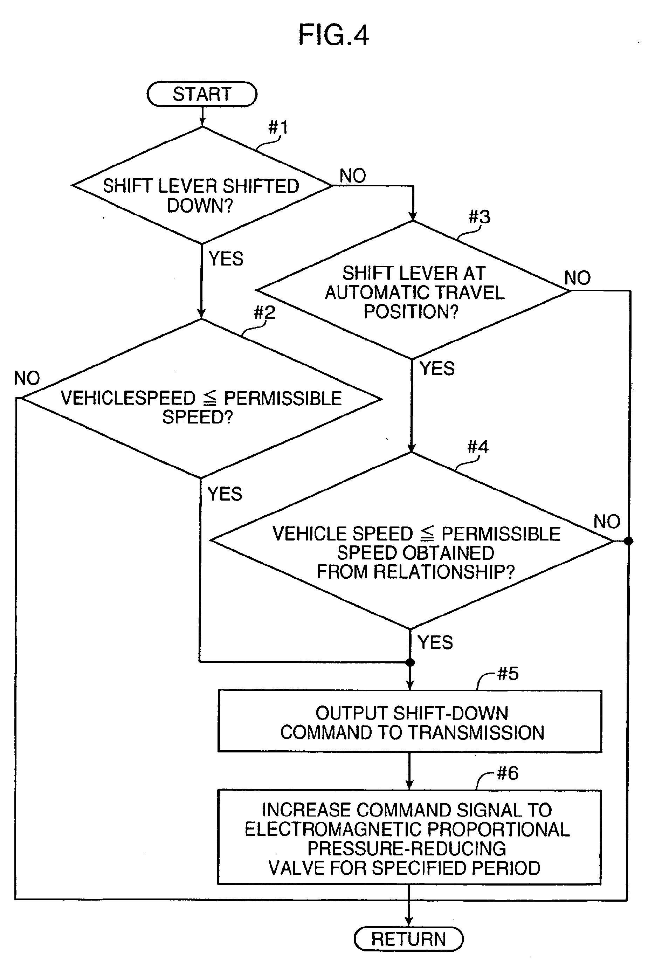

Next, actions at the time of switching the transmission 28 from the high-speed range to the low-speed range are described with reference to a timing chart of FIG. 3 and a flow chart of FIG. 4.

The controller 60 switches the transmission 28 from the high-speed range to the low-speed range when a travel state of the vehicle satisfies a specific condition during a deceleration period during which the vehicle speed V gradually decreases, for example, as shown in FIG. 3. A switching condition to the low-speed range can be suitably set.

In an example shown in FIG. 4, this condition is satisfied when the gear is shifted down by means of the shift lever apparatus 58 (YES in Step #1) and the vehicle speed sensor 56 detects the vehicle speed V equal to or below a permissible speed set beforehand (YES in Step #2) or when the shift lever apparatus 58 is at an automatic travel position (YES in Step #3) and the vehicle speed V detected by the vehicle speed sensor 56 is equal to or below a permissible speed calculated from a relationship with the engine speed (or the operated amount of the acceleration pedal 10) (YES in Step #4). Then, a shift-down command signal is outputted to the transmission 28 as shown in the third and second stages from the bottom in FIG. 3, thereby starting the switch to the low-speed range (Step #5).

Even if such a switch to the low-speed range is carried out, the vehicle speed V and the speed of the travel wheels 30 do not suddenly decrease as shown in FIG. 3 due to the inertia of the vehicle during a switch response period. Accordingly, rotating speed Nm of the hydraulic motor 26 may suddenly increase. Here, pressure P in the pipe 24 suddenly increases as the motor rotating speed Nm increases if no measure is taken. This may lead to an occurrence of sudden braking, damages of hydraulic devices or the like.

As a measure against it, in the shown apparatus, the controller 60 causes the command pressure of the electromagnetic proportional pressure-reducing valve 44 to rise above the pressure shown by the curve b of FIG. 2A simultaneously with the start of the switch to the low-speed range (point A in FIG. 3) (bottommost stage in FIG. 3), and causes the command pressure to return to its original pressure (pressure shown by the curve b) with a slight delay from the end timing of the switch to the low-speed range (point B in FIG. 3). In other words, the command pressure of the electromagnetic proportional pressure-reducing valve 44 is raised only for a specified period (Step #6 of FIG. 4).

In this way, a pump capacity Dp and a pump take-up flow rate Qp of the variable displacement-type hydraulic pump 18 temporarily increase, whereby an increase in motor discharge flow rate Qm resulting from a sudden increase of the motor rotating speed Nm is taken up in the form of engine braking through the rotation of the variable displacement-type hydraulic pump 18. Specifically, a drive torque Tp of the engine 12 by the variable displacement-type hydraulic pump 18 is substantially given by:

$$Tp = Dp \times P / 2\pi.$$

Thus, by temporarily increasing the pump capacity Dp, an increased amount of energy due to a sudden increase of the motor rotating speed Nm can be effectively taken up using the drive torque Tp of the engine 12.

At this time, there comes a situation where the deceleration rate temporarily decreases and the vehicle speed V hardly decelerates. However, unlike the prior art in which the flow is taken up by the relief operation, a time required to take up this flow is sufficient to be substantially equal to a speed transition period from the high-speed range to the low-speed range and is generally a negligible period of about 100 msec. Therefore, there is almost no likelihood of letting the operator feel discomfort. Further, temperature is unlikely to increase in the closed circuit and there is no likelihood of damaging the hydraulic devices and the like.

During the speed transition period, the circuit pressure P and the deceleration rate "a" start returning (point D of FIG. 3) before the completion of the switch to the low-speed range, and the engine speed Ne and the pump take-up flow rate Qp also start increasing from this point of time.

If the command pressure of the electromagnetic proportional pressure-reducing valve 44 and the pump capacity Qp are gradually decreased as shown in FIG. 3 from about a timing before the end of the speed transition period, the pump capacity Qp can smoothly transition from the temporarily increased state to the normal state.

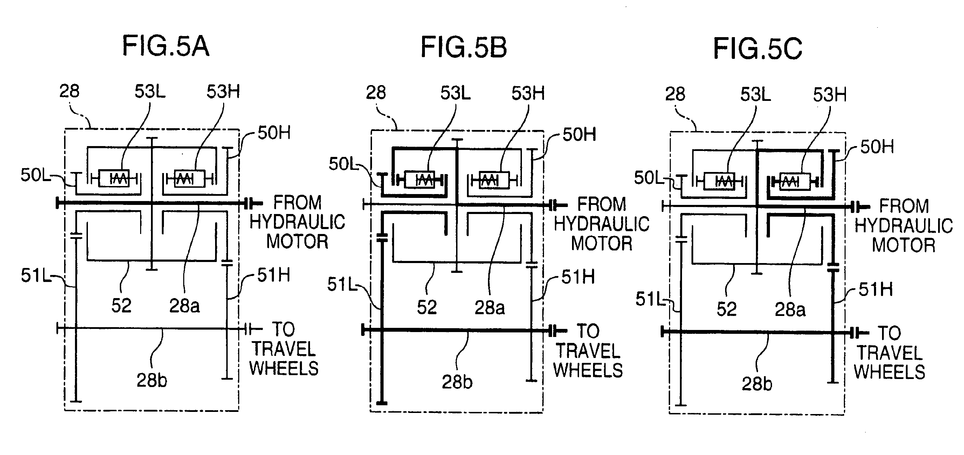

In the apparatus of FIG. 1, if the command signal to the solenoid 36f or 36b of the electromagnetic switching valve 36 suddenly ceases due to the disconnection of the cable or the like during the forward travel or the backward travel, the electromagnetic switching valve 36 is automatically switched to its neutral position (position where it shuts off the connection between the regulator 38 and the shuttle valve 46) by the action of its spring, and the capacity of the variable displacement-type hydraulic pump 18 becomes zero or comes to take a value approximate to zero and this pump 18 enters a blocked state. If the hydraulic motor 26 continues to rotate at a high speed together with the travel wheels 30 due to the inertia of the vehicle in this state, there is a possibility that pressure at the discharge side (oil outflow side) of the hydraulic motor 26 suddenly increases to produce a braking pressure, thereby causing a sudden stop of the vehicle or damages of the respective devices. However, in this apparatus, the controller 60 forcibly switches the transmission 28 to the neutral state upon detecting an abnormality to disconnect the hydraulic motor 26 from the travel wheels 30, thereby effectively suppressing inconveniences such as the sudden stop of the vehicle and the damages of the devices. A specific construction is described with reference to FIGS. 5 to 9.

First, the transmission 28 is described. This transmission 28 can be switched to three states: the neutral state shown in FIG. 5A, a low-speed state shown in FIG. 5B, and a high-speed state shown in FIG. 5C in accordance with a change gear command signal inputted from the outside.

Specifically, the transmission 28 is provided with an input shaft 28a coupled to the output shaft of the hydraulic motor 26 and an output shaft 28b coupled to the travel wheels 30, wherein the two shafts 28a, 28b are aligned in parallel. A low-speed gear 50L having a smaller diameter and a high-speed gear 50H having a larger diameter are so mounted on the input shaft 28a as to be relatively rotatable, whereas a low-speed gear 51L to be engaged with the low-speed gear 50L and a high-speed gear 51H to be engaged with the high-speed gear 50H are so fixed to the output shaft 28b as to rotate together with the output shaft 28b.

A clutch drum 52 is so fixed to the input shaft 28a as to rotate together with the input shaft 28a, and a low-speed clutch cylinder 53L and a high-speed clutch cylinder 53H are provided between this clutch drum 52 and the low-speed gear 50L and the high-speed gear 50H. When no command signal is inputted to either one of the clutch cylinders 53L, 53H, the two cylinders 53L, 53H are held contracted to disconnect the clutch drum 52 and the two gears 50L, 50H and disconnect the input shaft 28a and the output shaft 28b (neutral state of FIG. 5A). When the command signal is inputted to the low-speed clutch cylinder 53L, only the cylinder 53L is extended to connect the clutch drum 52 and the low-speed gear 50L, whereby the rotation of the input shaft 28a is transmitted to the output shaft 28b via the low-speed gears 50L, 51L (low-speed state of FIG. 5B). When the command signal is inputted to the high-speed clutch cylinder 53H, only the cylinder 53H is extended to connect the clutch drum 52 and the high-speed gear 50H, whereby the rotation of the input shaft 28a is transmitted to the output shaft 28b via the high-speed gears 50H, 51H (high-speed state of FIG. 5C).

The controller 60 is connected with the engine speed sensor 54, the vehicle speed sensor 56, the shift lever device 58 and the like, and controllably switches the electromagnetic switching valve 36 and the transmission 28 in accordance with electrical signals inputted from these devices.

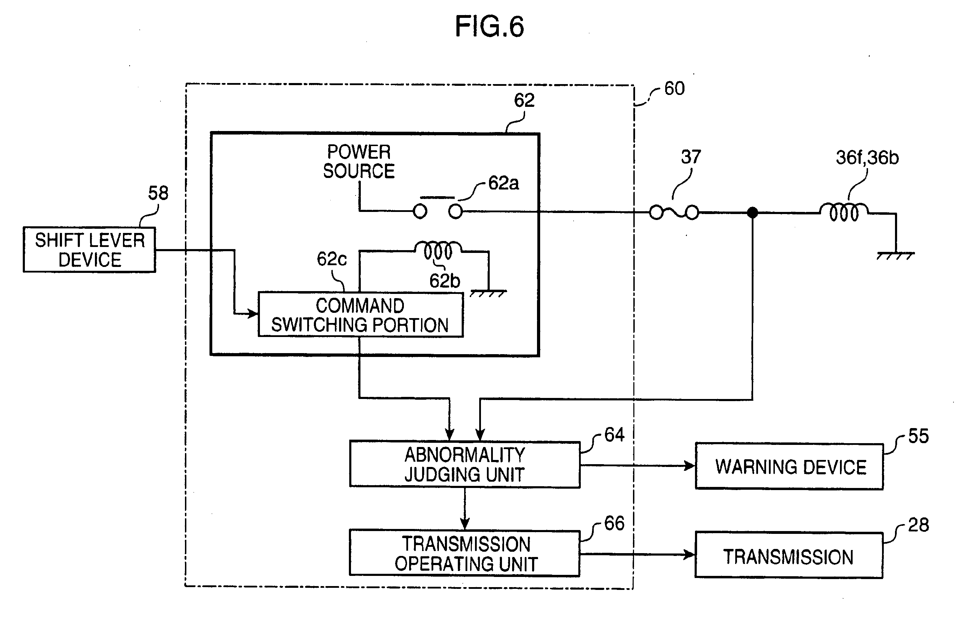

Specifically, this controller 60 is provided with a command signal generating unit 62, an abnormality judging unit 64 and a transmission operating unit 66 as shown in FIG. 6.

The command signal generating unit 62 outputs a command signal to the electromagnetic switching valve 36 to switch the position of the valve 36 in accordance with a shift lever position set by means of the shift lever device 58.

Specifically, this command signal generating unit 62 includes relay contacts 62a and relay coils 62b provided for the respective solenoids 36f, 36b of the electromagnetic switching valve 36 (only one relay contact 62a and one relay coil 62b are shown in FIG. 6), and a command switching portion 62c.

The relay contact 62a is a constantly open contact, is provided between a specified power supply and the solenoid 36f (36b) together with a fuse 37 for protecting the circuit. Only when power is applied to the relay coil 62b proximate to the relay contact 62a, the relay contact 62a is closed due to its magnetic force.

The command switching portion 62c is for applying power to the suitable relay coil 62b depending on the lever position of the shift lever device 58. Specifically, when the lever position is at the forward position, power is applied to the relay coil 62b corresponding to the solenoid 36f to generate a command signal to excite the solenoid 36f. When the lever position is at the backward position, power is applied to the relay coil 62b corresponding to the solenoid 36b to generate a command signal to excite the solenoid 36b. When the lever position is at the neutral position, power is applied to neither one of the relay coils 62b (i.e. so as to generate no command signal).

It should be noted that, instead of the relay switch as shown, a non-contact circuit using a transistor or the like may be used in the command signal generating unit 62. Whether or not a circuit protecting element against a short circuit is provided is an arbitrary matter and a circuit protecting portion may be constructed by a transistor or the like instead of the fuse 37 as above.

The abnormality judging unit 64 monitors the potentials of the solenoids 36f, 36b and compares actual energized states of these solenoids 36f, 36b and the energized states of the relay coils 62b by the command switching portion 62c (i.e. generated state of the command signal). If the two energized states do not correspond (to be described in detail later), the abnormality judging unit 64 outputs an abnormality judgment signal to the transmission operating unit 66 and outputs a warning signal to a warning device (e.g. warning lamp or alarm) 55 provided in a passenger compartment to warn.

The transmission operating unit 66 outputs a command signal to the transmission 28 to switch the transmission 28. Normally, the transmission 28 is controllably switched by selecting a shift position corresponding to the operating condition of the vehicle and the shift-down operation of the shift lever device 58. When the abnormality judging signal is inputted from the abnormality judging unit 64, the transmission operating unit 66 is forcibly switched to the neutral state as a feature of the present invention.

The controller 60 according to this embodiment also functions to operate the capacity of the variable displacement-type hydraulic pump 18. Specifically, the controller 60 calculates the command pressure corresponding to the speed detected by the engine speed sensor 54, and outputs a command signal conforming to this command pressure to the electromagnetic proportional pressure-reducing valve 44 to adjust the secondary pressure of the electromagnetic proportional pressure-reducing valve 44 to the command pressure.

The command pressure calculated by the controller 60 is not limited to the pressure corresponding to the speed detected by the engine speed sensor 54, and may be a command pressure, for example, corresponding to the operated amount of the acceleration pedal. It goes without saying that the control of the controller 60 can be left out in the case of actuating the regulator 38 only by the hydraulic oil discharged from the capacity operating hydraulic pump 20.

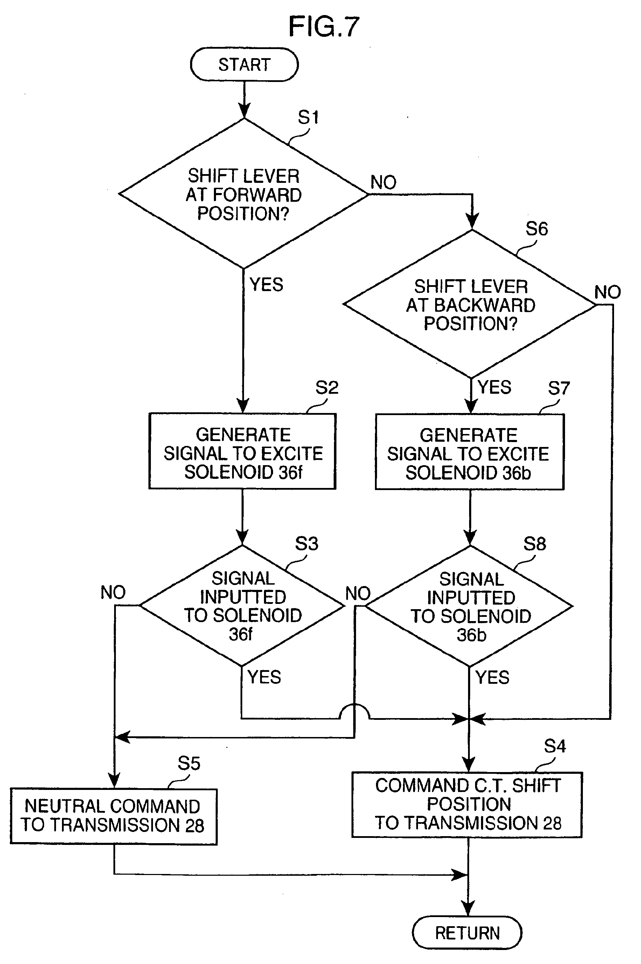

Next, the functions of this apparatus are described also with reference to a flow chart of FIG. 7.

When pressure is exerted on the acceleration pedal 10, the speed of the engine 12 increases according to the operated amount of the acceleration pedal 10, with the result that the rotating speeds of the variable displacement-type hydraulic pump 18 and the capacity operating hydraulic pump 20 increase.

Here, if the lever position is switched to the forward position (YES in Step S1 of FIG. 7), the command signal generating unit 62 of the controller 60 generates a signal to excite the solenoid 36f of the electromagnetic switching valve 36 (Step S2). At this time, if there is no abnormality in an electrical system such as cables, the command signal is inputted to the solenoid 36f (YES in Step S3), whereby the electromagnetic switching valve 36 is switched to the forward position (right position in FIG. 1) and the hydraulic pressure outputted from the shuttle valve 46 is supplied to the forward port (right port in FIG. 1) of the regulator 38. Upon receiving this hydraulic pressure, the regulator 38 increases the capacity of the variable displacement-type hydraulic pump 18 in forward direction. Through this capacity operation, the hydraulic oil is discharged from the variable displacement-type hydraulic pump 18 to the hydraulic motor 26 via the pipe 22, and the output shaft of the hydraulic motor 26 and the travel wheels 30 coupled to this output shaft via the transmission 28 are driven in forward direction.

Here, if the electromagnetic proportional pressure-reducing valve 44 has no abnormality, the secondary pressure thereof is constantly kept to be equal to or above the hydraulic pressure supplied from the capacity operating hydraulic pump 20 to the shuttle valve 46, and the hydraulic pressure outputted from the electromagnetic proportional pressure-reducing valve 44 is constantly selected as a higher pressure in the shuttle valve 46 and introduced to the regulator 38. In the case that the electromagnetic proportional pressure-reducing valve 44 cannot output a normal secondary pressure due to the trouble of its solenoid or the like, the hydraulic pressure from the capacity operating hydraulic pump 20 is selected as a higher pressure in the shuttle valve 46 and introduced to the regulator 38. Thus, a normal capacity operation can be guaranteed.

Conversely, if the lever position is switched to the backward position (NO in Step S1 and YES in Step S6), the command signal generating unit 62 of the controller 60 generates a signal to excite the solenoid 36b of the electromagnetic switching valve 36 (Step S7). At this time as well, if there is no abnormality in the electrical system such as cables, the command signal is inputted to the solenoid 36b (YES in Step S8), whereby the electromagnetic switching valve 36 is switched to the backward position (left position in FIG. 1), the hydraulic pressure outputted from the shuttle valve 46 is supplied to the backward port (left port in FIG. 1) of the regulator 38, and the travel wheels 30 are finally driven in backward direction.

As described above, if the command signal generated by the command signal generating unit 62 of the controller 60 is normally inputted to the solenoid 36f or 36b (YES in Step S3 or YES in Step S8 in FIG. 7), the abnormality judging unit 64 of the controller 60 does not output the abnormality judging signal and, accordingly, the transmission operating unit 66 outputs a change gear command corresponding to the shift position determined by the present operating condition and the like to the transmission 28 (Step S4). Further, the same holds for the case where the shift lever is set at the neutral position (NO in Step S1 and NO in Step S6).

On the contrary, if the command signal is not actually inputted to the solenoid 36f or 36b due to the trouble of the electrical system or the like despite the generation of the command signal to excite the solenoid 36f or 36b in the command signal generating unit 62 (NO in Step S3 or NO in Step S8), the transmission operating unit 66 outputs a neutral command to the transmission 28 regardless of the present shift position to forcibly switch the transmission 28 to the neutral state of FIG. 5A (Step S5). Thus, the input shaft 28a and the output shaft 28b of the transmission 28 are disconnected to decouple the output shaft of the hydraulic motor 26 and the travel wheels 30. An inconvenience caused by the trouble of the electrical system or the like can be prevented through this decoupling.

Although the hydraulic motor 26 and the travel wheels 30 are decoupled using the transmission 28 in this embodiment, a simple clutch may, for example, be provided between the hydraulic motor 26 and the travel wheels 30 in place of the transmission for an apparatus in which a shiftable transmission is not provided between a hydraulic motor and travel wheels and this clutch may be disengaged at the time of emergency.

The use of pressure detecting means (e.g. pressure switch or pressure sensor) for detecting a secondary pressure of the electromagnetic switching valve 36 is more preferable as the means for detecting the operation abnormality of the electromagnetic switching valve 36. If such pressure detecting means is used, abnormality of the electromagnetic switching valve 36 itself or the hydraulic pressure source can also be dealt with.

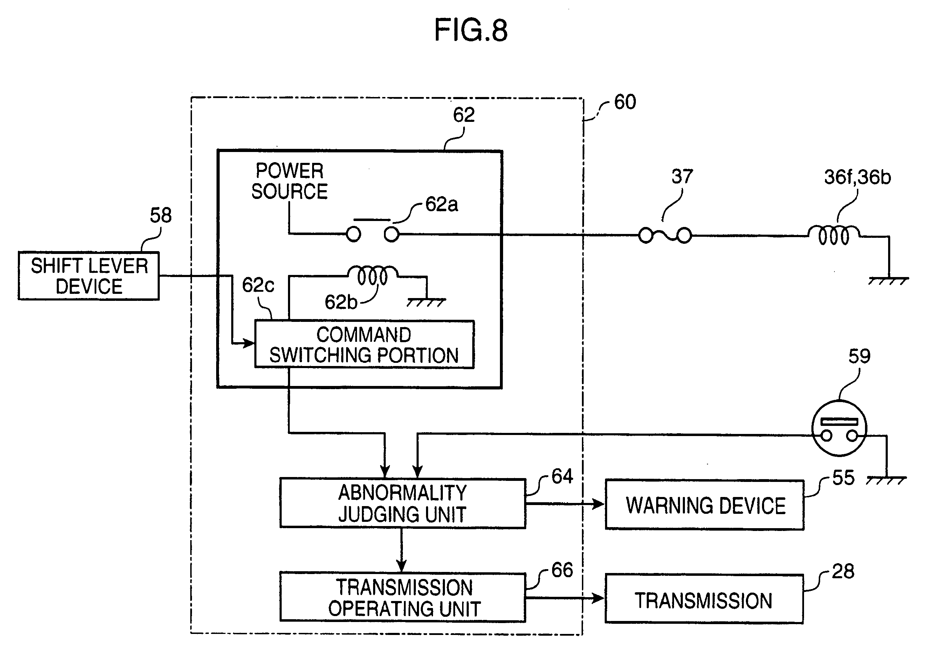

An example of such pressure detecting means is shown in FIG. 8. Shown pressure switches 59 are provided between the electromagnetic switching valve 36 and the forward port and the backward port of the regulator 38 and are turned on only when the pressure of the hydraulic oil (i.e. secondary pressure of the electromagnetic switching valve 36) actually supplied to these ports is equal to or above a specified pressure. Whether or not the electromagnetic switching valve 36 is actually normally operating can be judged by the turned-on or turned-off state of the pressure switches 59.

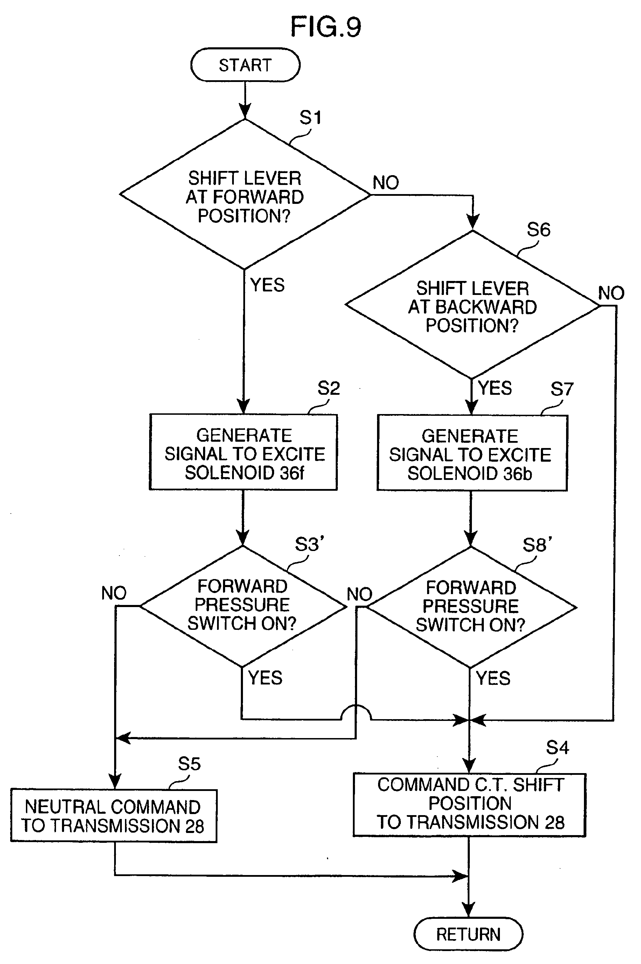

A control operation of the controller 60 in the case of using the pressure switches 59 is specifically shown in FIG. 9. In FIG. 9, when the shift lever is switched to the forward position (YES in Step S1) and the command signal to excite the solenoid 36f is generated in response to this switch of the shift lever (Step S2), the abnormality judging unit 64 of the controller 60 confirms whether or not the pressure switch 59 provided for the forward port of the regulator 38 is on (Step S3').

Further, when the shift lever is switched to the backward position (NO in Step S1, YES in Step S6) and the command signal to excite the solenoid 36b is generated in response to this switch of the shift lever (Step S7), the abnormality judging unit 64 of the controller 60 confirms whether or not the pressure switch 59 provided for the backward port of the regulator 38 is on (Step S8').

Here, if the corresponding pressure switch 59 is on (YES in Step S3' or YES in Step S8'), no abnormality judging signal is outputted because the hydraulic pressure is judged to be normally supplied to the regulator 38 and, therefore, the transmission operating unit 66 outputs a command signal corresponding to the shift position to the transmission 28 (Step S4). On the other hand, if the corresponding pressure switch 59 is kept off (NO in Step S3' or NO in Step S8'), the abnormality judging signal is outputted because the hydraulic pressure is judged not to be normally supplied to the regulator 38 due to the operation abnormality of the electromagnetic switching valve 36 or the like. Therefore, the transmission operating unit 66 outputs the neutral command to the transmission 28 to forcibly disconnect the hydraulic motor 26 and the travel wheels 30 (Step S5).

Abnormality is judged if the secondary pressure is equal to or below a predetermined value regardless of the size of the command signal in the example shown in FIG. 9. However, in an apparatus constructed such that the secondary pressure of the electromagnetic proportional pressure-reducing valve 44 and the secondary pressure of the electromagnetic switching valve 36 increase or decrease in accordance with a command signal as in the apparatus shown in FIG. 1, a pressure sensor or the like for detecting the secondary pressure of the electromagnetic switching valve 36 may be provided in place of the pressure switch 59, and abnormality may be judged when a difference between a target secondary pressure to be produced at the secondary side of the electromagnetic switching valve 36 and the secondary pressure actually detected by the pressure sensor or the like is equal to or above a specified value.

Further, instead of detecting the secondary pressure of the electromagnetic switching valve 36, it is also effective to detect, for example, an actual angle of inclination of the variable displacement-type hydraulic pump 18 and judge abnormality if the angle of inclination does not correspond to the command signal.

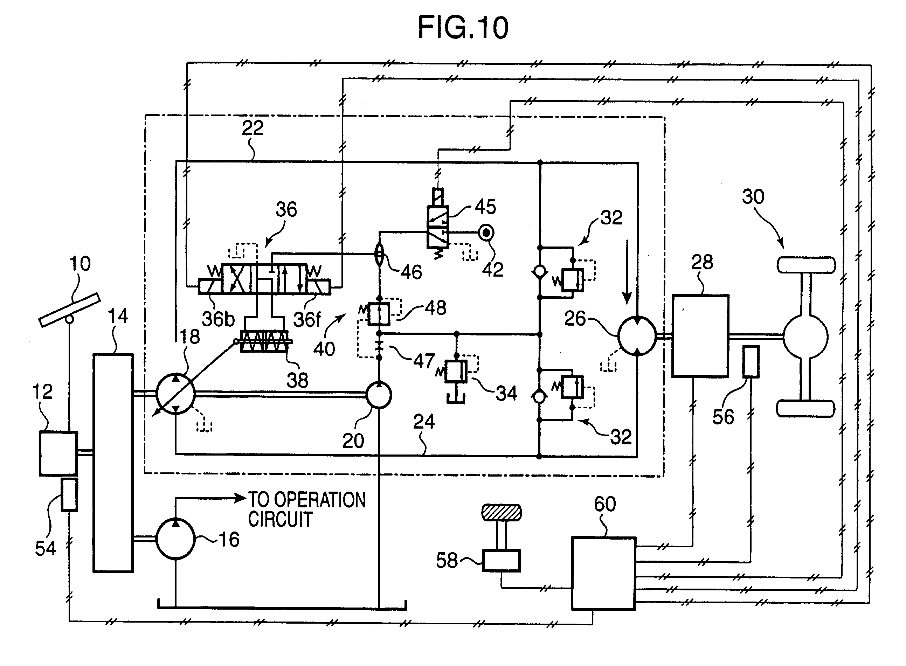

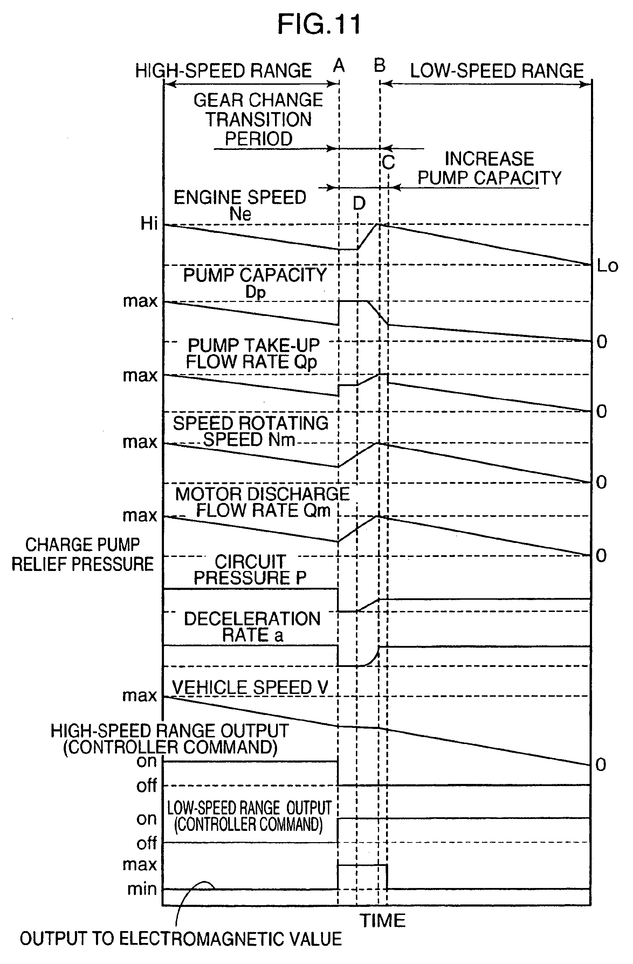

Next, a second embodiment of the present invention is described with reference to FIGS. 10 and 11.

In this embodiment, in place of the electromagnetic proportional pressure-reducing valve 44 shown in FIG. 1, an electromagnetic switching valve 45 is provided between the high hydraulic pressure source 42 and the shuttle valve 46 as a valve for selecting a higher pressure as shown in FIG. 10.

This electromagnetic switching valve 45 is switched to a position (lower position in FIG. 10) where it shuts off the supply of the hydraulic pressure from the high hydraulic pressure source 42 to the shuttle valve 46 if an excitation signal (command signal) for the solenoid is not inputted from the controller 60 while being switched to a position (upper position in FIG. 10) where it permits the supply of the hydraulic pressure from the high hydraulic pressure source 42 to the shuttle valve 46 if the excitation signal is inputted. The hydraulic pressure outputted from the high hydraulic pressure source 42 is set to be higher than a maximum pressure of the hydraulic oil supplied from the capacity operating hydraulic pump 20 to the shuttle valve 46 via the throttle 47 and the pressure-reducing valve 48. On the other hand, the controller 60 does not input the excitation signal to the electromagnetic switching valve 45 in the operating conditions except the one at the time of switching the transmission 28 from the high-speed range to the low-speed range (i.e. the electromagnetic switching valve 45 is switched to the shutoff position). Conversely, at the time of the switch to the low-speed range, the controller 60 inputs the excitation signal to the electromagnetic switching valve 45 substantially simultaneously with start timing A of the switch to the low-speed range as shown at the bottommost stage of FIG. 11 to switch this valve 45 to the permitting position and, thereafter, stops the input of the excitation signal at timing C reached after the lapse a specified very short period from switch end timing B to switch the electromagnetic switching valve 45 to the shutoff position.

In the apparatus according to this embodiment, the electromagnetic switching valve 45 is located at the shutoff position to shut off the supply of the hydraulic pressure from the high pressure source 42 to the shuttle valve 46 in the operating conditions except the one at the time of the switch to the low-speed range. Thus, the hydraulic pressure supplied from the capacity operating hydraulic pump 20 via the throttle 47 and the pressure-reducing valve 48 is selected as a higher pressure in the shuttle valve 46. Accordingly, when the electromagnetic switching valve 36 is switched to the forward position (left position in FIG. 10) or the backward position (right position in FIG. 10), the hydraulic oil discharged from the capacity operating hydraulic pump 20 is solely supplied to the regulator 38. As a result, the pump capacity Dp (see FIG. 11) of the variable displacement-type hydraulic pump 18 is operated by the characteristic shown by the curve "a" of FIG. 2A as the engine speed Ne changes.

On the contrary, at the time of switching the transmission 28 from the high-speed range to the low-speed range, the electromagnetic switching valve 45 is switched to the permitting position, and the hydraulic pressure is supplied from the high pressure source 42 to the shuttle valve 46. Further, since the supplied hydraulic pressure is higher than the hydraulic pressure supplied from the capacity operating hydraulic pump 20 to the shuttle valve 46 via the throttle 47 and the pressure-reducing valve 48, the hydraulic pressure outputted from the secondary pressure source 42 is selected as a higher pressure and introduced to the regulator 38. Since this causes the pump capacity Dp and the pump take-up flow rate Qp of the variable displacement-type hydraulic pump 18 to temporarily increase (see FIG. 11), an increase of the motor discharge flow rate Qm resulting from an increase of the motor rotating speed Nm at the time of the switch to the low-speed can be effectively taken up by the variable displacement-type hydraulic pump 18 similar to the apparatus shown in FIGS. 1 to 4.

In this case as well, it is sufficient to increase the pump capacity Dp for a very short period corresponding to a transition period of the switch to the low-speed range. Thus, even if a deceleration rate "a" temporarily decreases during this period (even if the vehicle speed V does not decrease), there is almost no likelihood of letting an operator feel discomfort.

In the apparatus shown in FIG. 10, the electromagnetic switching valve 45 and the shuttle valve 46 are used as hydraulic pressure supply switching means for switching to the state where the hydraulic pressure is supplied to the regulator from the high pressure source 42 and to the state where the hydraulic pressure is supplied from the capacity operating hydraulic pump 20. However, they may be, for example, omitted and a two-position electromagnetic switching valve switchable to the above two states in accordance with a command signal from the outside may be provided.

The number of speed ranges in the transmission 28 does not particularly matter. In the case of providing three or more speed ranges, the control of increasing the pump capacity according to the present invention may be applied for all the switches to lower speed ranges (e.g. including the transition from the high-speed range to the middle-speed range) or may be applied only for the switch to the low-speed range during which an increase of the motor rotating speed is a particularly serious problem.

In the timing charts shown in FIGS. 3 and 11, the pump capacity Dp is increased simultaneously with the start of the switch to the low-speed range and the increase of the pump capacity Dp is stopped upon the lapse of the very short period from the end timing of the switch to the low-speed range. However, there may be slight time lags (e.g. about 100 msec.) between the start and end timings of the switch to the low-speed range and the start and end timings of increasing the pump capacity Dp. In short, it is sufficient to securely increase the pump capacity Dp upon the switch to the low-speed range and suppress this increasing period to such a short period as not to let the operator feel discomfort due to the decreased deceleration rate resulting from the increased pump capacity Dp. The timing of increasing the pump capacity may be set in consideration of clutch coupling response in each speed range of the transmission 28 and the change gear ratio.

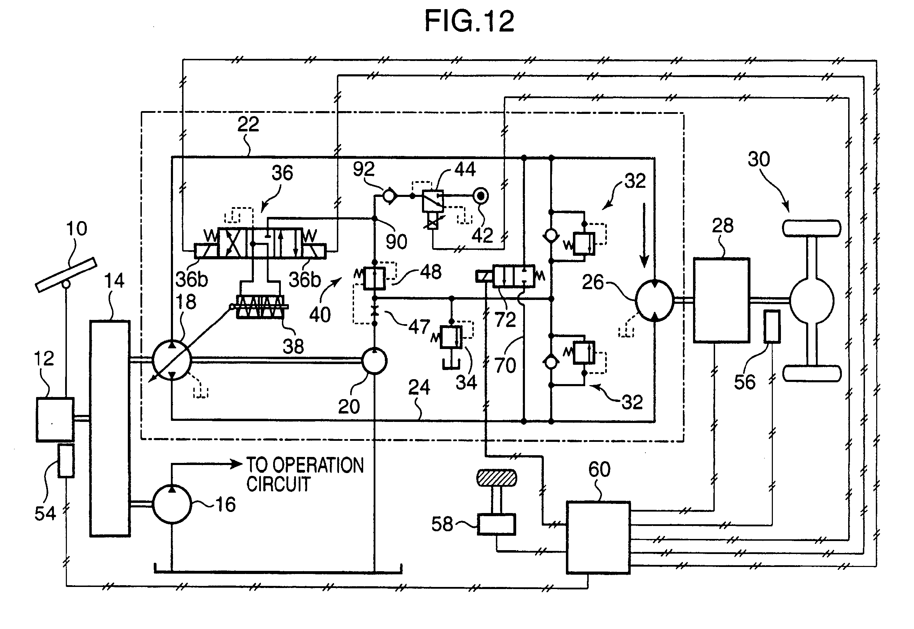

FIG. 1 shows the apparatus in which a higher one of the hydraulic pressure outputted from the electromagnetic proportional pressure-reducing valve 44 and the hydraulic pressure outputted from the capacity operating hydraulic pump 20 is selected in the shuttle valve 46 and introduced to the regulator 38. The capacity operating hydraulic pump 20 may be omitted in this apparatus. The higher pressure may not necessarily be selected by the shuttle valve (higher pressure selecting valve) 46 as shown, and any construction can be adopted provided that the higher pressure is, in substance, selected. For example, a construction as shown as a third embodiment in FIG. 12 may be adopted in which a check valve 92 may be provided between a junction point 90 of the output from the electromagnetic proportional pressure-reducing valve 48 and the output from the capacity operating hydraulic pump 20 and the electromagnetic proportional pressure-reducing valve 48. If a higher pressure can be selected at the junction point 90 due to a smaller flow rate of the pressure-reducing valve 48 at the side of the hydraulic pump 20 even in this construction, the shuttle valve 46 is not particularly necessary.

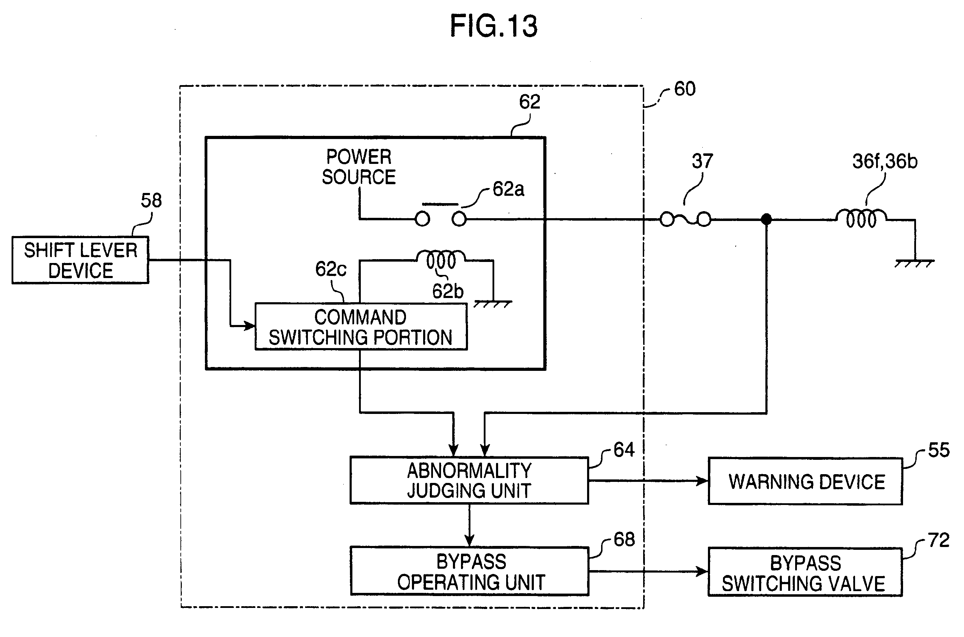

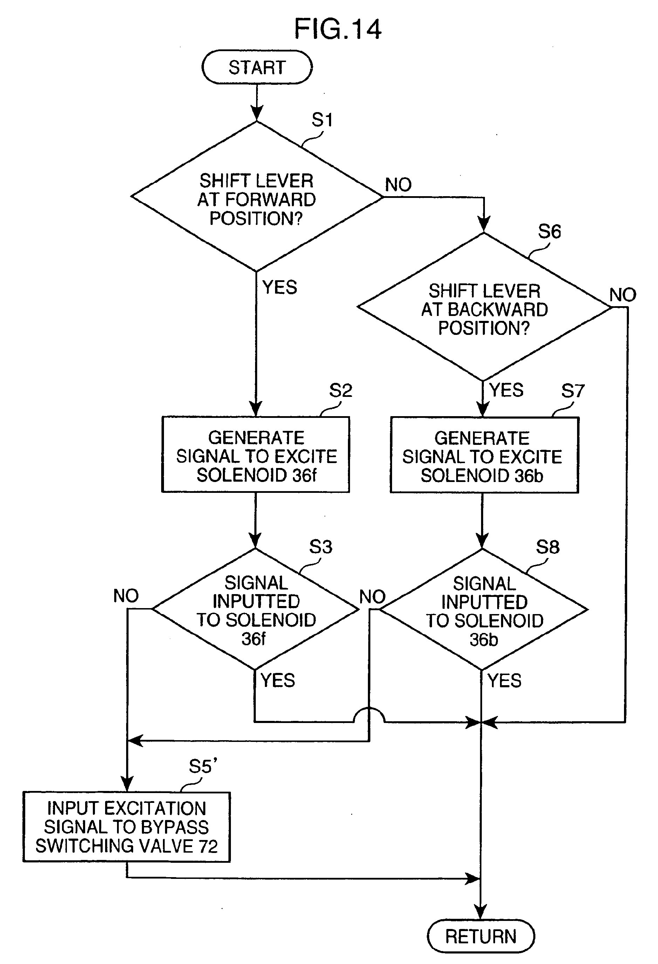

The apparatus shown in FIG. 12 is constructed such that an inconvenience caused by the operation abnormality of the electromagnetic switching valve 36 or the like is avoided by forcibly bypassing the variable displacement-type hydraulic pump 18. A specific construction is described also with reference to FIGS. 13 and 14. It should be noted that elements shown in FIGS. 12 and 13 equivalent to those shown in FIGS. 1 and 10 are identified by the same reference numerals and not described.

In this apparatus, a bypass hydraulic pipe 70 for connecting the two pipes 22, 24 by bypassing the variable displacement-type hydraulic pump 18 is provided between the pipes 22 and 24, and a bypass switching valve 72 is provided in an intermediate position of this bypass hydraulic pipe 70. This bypass switching valve 72 is constructed by a two-position electromagnetic switching valve in the shown example, and switched to a closing position where it closes the bypass hydraulic pipe 70 when no excitation signal is inputted to a solenoid thereof while being switched to an opening position where it opens the bypass hydraulic pipe 70 only when the excitation signal is inputted.

On the other hand, the controller 60 includes a bypass operating unit 68 as shown in FIG. 13. This bypass operating unit 68 inputs an excitation signal to the solenoid of the bypass switching valve 72 to switch the position of the bypass switching valve 72 from the closing position to the opening position only when an abnormality judging signal is inputted thereto from the abnormality judging unit 64.

A control operation by this controller 60 is shown in FIG. 14. A normal operation is similar to the one shown in FIG. 6. Specifically, when the shift lever is operated to the forward position (YES in Step S1), a signal to excite the solenoid 36f is generated (Step S2) and whether or not this signal has been inputted to the solenoid 36f is confirmed (Step S3). Similarly, when the shift lever is operated to the backward position (NO in Step S1 and YES in Step S6), a signal to excite the solenoid 36b is generated (Step S7) and whether or not this signal has been inputted to the solenoid 36b is confirmed (Step S8).

Here, if the signal is normally inputted to the solenoid 36f or 36b (YES in Step S3 or YES in Step S8), the bypass switching valve 72 is not particularly operated and kept at the closing position. Accordingly, the HST operates as usual in this case. On the contrary, if the signal is not normally to the solenoid 36f or 36b, i.e. if abnormality judgment is to be made (NO in Step S3 or NO in Step S8), the excitation signal is outputted to the bypass switching valve 72 to switch this valve 72 to the opening position (Step S5'). In this way, the bypass hydraulic pipe 72 is opened to directly connect the inflow side and the outflow side of the hydraulic motor 26 by bypassing the variable displacement-type hydraulic pump 18. Accordingly, even if the electromagnetic switching valve 36 inadvertently returns to the neutral position due to the trouble of the electrical system or the like to suddenly decrease the capacity of the variable displacement-type hydraulic pump 18, the hydraulic oil flowing out from the hydraulic motor 26 can be let to escape to the inflow side via the bypass hydraulic pipe 70, thereby avoiding inconveniences such as an occurrence of sudden braking and breakages of devices resulting from an excessive increase of the circuit pressure.

In any of the apparatuses described above, the electromagnetic switching valve 36 of the spring centering type is used to switch the supply of the hydraulic pressure to the regulator 38, i.e. to switch the angle of inclination of the variable displacement-type hydraulic pump 18. Thus, the electromagnetic switching valve 36 returns to the neutral position when the input of the command signal to the electromagnetic switching valve 36 ceases. If a switching valve having a function of keeping the present operating position when the command signal is not inputted, for example, an electromagnetic switching valve of the detent type is used as a switching valve for performing the above switching operation, an inconvenience that the electromagnetic switching valve suddenly returns to the neutral position when the command signal is inputted no longer can be avoided even if the input of the command signal ceases due to the trouble of the electrical system or the like.

However, since the electromagnetic switching valve of the detent type generally has two positions (not three positions) by having solenoids for switching positions disposed at the opposite ends thereof, a plurality of electromagnetic switching valves need to be used in combination if the position is switched to forward, neutral and backward positions using the electromagnetic switching valve of the detent type.

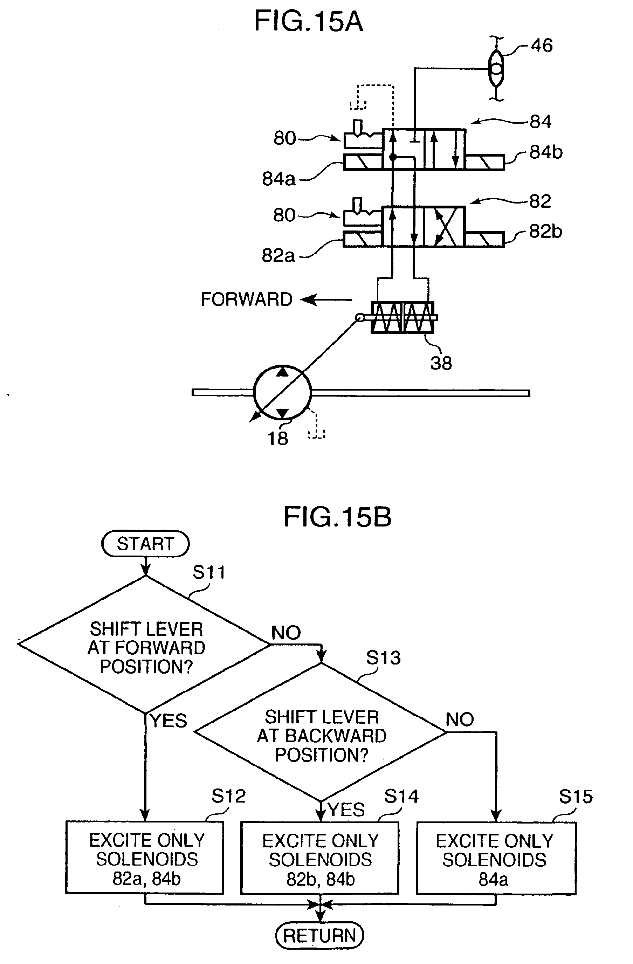

One example of such an apparatus is shown in FIGS. 15A and 15B. In FIG. 15A, two electromagnetic switching valves 82, 84 are arranged in series between the regulator 38 and the shuttle valve 46, and the construction other than these electromagnetic switching valves 82, 84 is identical to the one shown in FIG. 1.

Two-position electromagnetic switching valves of the detent type are used as the electromagnetic switching valves 82, 84. The electromagnetic switching valve 82 closer to the regulator 38 includes solenoids 82a, 82b at the opposite ends thereof, and the electromagnetic switching valve 84 closer to the shuttle valve 46 includes solenoids 84a, 84b, wherein the electromagnetic switching valves 82, 84 are provided with known means (detent mechanisms 80 in the shown example) for keeping the present operating position when neither one of the solenoids is excited.

When the solenoid 84a is excited, the electromagnetic switching valve 84 is switched to a neutral position (shutoff position; left position in FIG. 15A), where both forward port and backward port of the regulator 38 are connected with the tank to block the supply of the hydraulic pressure from the shuttle valve 46, regardless of the operating position of the electromagnetic switching valve 82. On the other hand, when the solenoid 84b is excited, the electromagnetic switching valve 84 is switched to a connecting position (permitting position; right position in FIG. 15A) where either one of the ports of the regulator 38 is connected with the shuttle valve 46 and the other thereof is connected with the tank.

When the solenoid 82a is excited, the electromagnetic switching valve 82 is switched to a forward position (left position in FIG. 15A) where the hydraulic pressure supplied from the electromagnetic switching valve 84 at the connecting position is introduced to the forward port and the backward port is connected with the tank. On the other hand, when the solenoid 82b is excited, the electromagnetic switching valve 82 is switched to a backward position (right position in FIG. 15A) where the hydraulic pressure supplied from the electromagnetic switching valve 84 at the connecting position is introduced to the backward port and the forward port is connected with the tank.

On the other hand, a controller (equivalent to the controller 60 shown in FIG. 1 and other figures) carries out a control operation as shown in FIG. 15B in accordance with the operated position of the shift lever.

Specifically, when the shift lever is switched to the forward position (YES in Step S11), the controller 60 excites only the solenoids 82a, 84b of the electromagnetic switching valves 82, 84 while not exciting the solenoids 82b, 84a (Step S12). Thus, the electromagnetic switching valve 84 is switched to the right position of FIG. 15A and the electromagnetic switching valve 82 is switched to the left position of FIG. 15A, whereby the hydraulic pressure outputted from the shuttle valve 46 is supplied to the forward port of the regulator 38 and the backward port of the regulator 38 is connected with the tank.

On the contrary, when the shift lever is switched to the backward portion (NO in Step S11 and YES in Step S13), the controller 60 excites only the solenoids 82b, 84b of the electromagnetic switching valves 82, 84 while not exciting the solenoids 82a, 84a (Step S14). Thus, the electromagnetic switching valves 82, 84 are both switched to the right positions of FIG. 15A, whereby the hydraulic pressure outputted from the shuttle valve 46 is supplied to the backward port of the regulator 38 and the forward port of the regulator 38 is connected with the tank.

Further, when the shift lever is switched to the neutral position (NO in Steps S11, S13), the controller 60 excites only the solenoid 84a of the electromagnetic switching valve 84 while not exciting the other solenoids 82a, 82b, 84b (Step S15). Thus, the electromagnetic switching valve 84 is switched to the left position of FIG. 15A, whereby both ports of the regulator 38 are connected with the tank regardless of the position of the electromagnetic switching valve 82 and the pump capacity of the variable displacement-type hydraulic pump 18 becomes substantially zero.

In the case that the two electromagnetic switching valve of the detent type are used in combination, these electromagnetic switching valves may be arranged in parallel between the variable displacement-type hydraulic pump 18 and the hydraulic pressure supplying side (shuttle valve 46 in the shown example). Even with the parallel arrangement, a plurality of electromagnetic switching valves need to be used in combination for the switches to forward, backward and neutral positions.

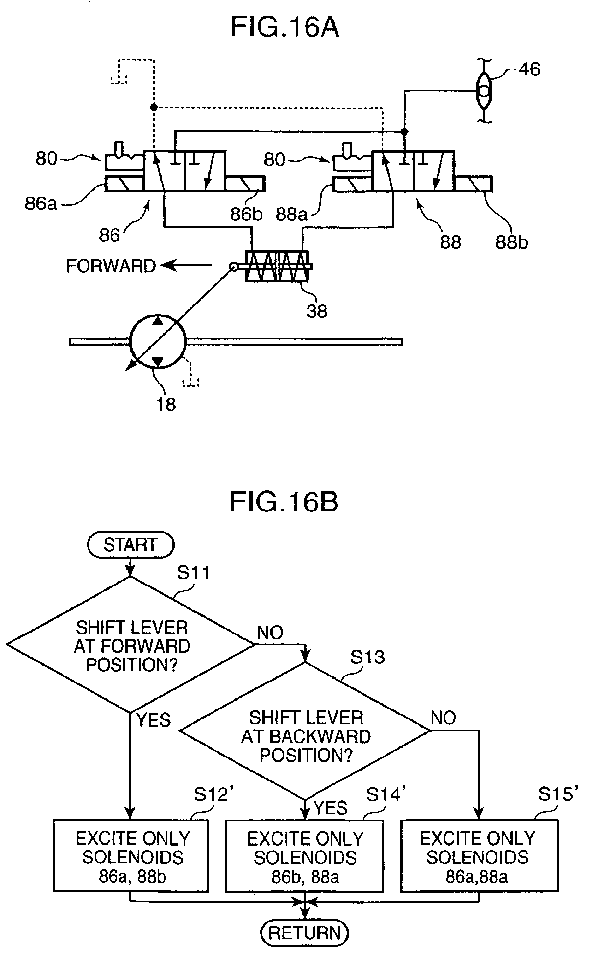

One example of such an apparatus is shown in FIGS. 16A and 16B. In FIG. 16A, an electromagnetic switching valve 88 is provided between the shuttle valve 46 and the forward port of the regulator 38 and an electromagnetic switching valve 86 is provided between the shuttle valve 46 and the backward port of the regulator 38.

The electromagnetic switching valve 88 includes solenoids 88a, 88b at the opposite ends thereof, and is switched to a shutoff position (left position in FIG. 16A) where the hydraulic pressure supplied from the shuttle valve 46 is blocked and the forward port is connected with the tank when the solenoid 88a is excited while being switched to a permitting position (right position in FIG. 16A) where the supply of the hydraulic pressure from the shuttle valve 46 to the forward port is permitted when the solenoid 88b is excited. Similarly, the electromagnetic switching valve 86 includes solenoids 86a, 86b at the opposite ends thereof, and is switched to a shutoff position (left position in FIG. 16A) where the hydraulic pressure supplied from the shuttle valve 46 is blocked and the backward port is connected with the tank when the solenoid 86a is excited while being switched to a permitting position (right position in FIG. 16A) where the supply of the hydraulic pressure from the shuttle valve 46 to the backward port is permitted when the solenoid 86b is excited.

A controller (equivalent to the controller 60 shown in FIG. 1 and other figures) carries out a control operation as shown in FIG. 16B in accordance with the operated position of the shift lever.

Specifically, when the shift lever is switched to the forward position (YES in Step S11), the controller 60 excites only the solenoids 86a, 88b of the electromagnetic switching valves 86, 88 while not exciting the solenoids 86b, 88a (Step S12'). Thus, the electromagnetic switching valve 88 is switched to the right position of FIG. 15A and the electromagnetic switching valve 86 is switched to the left position of FIG. 16A, whereby the hydraulic pressure outputted from the shuttle valve 46 is supplied to the forward port of the regulator 38 and the backward port of the regulator 38 is connected with the tank.

On the contrary, when the shift lever is switched to the backward portion (NO in Step S11 and YES in Step S13), the controller 60 excites only the solenoids 86b, 88a of the electromagnetic switching valves 86, 88 while not exciting the solenoids 86a, 88b (Step S14'). Thus, the electromagnetic switching valve 88 is switched to the left position of FIG. 16A and the electromagnetic switching valve 86 is switched to the right position of FIG. 16A, whereby the hydraulic pressure outputted from the shuttle valve 46 is supplied to the backward port of the regulator 38 and the forward port of the regulator 38 is connected with the tank.

When the shift lever is switched to the neutral position (NO in Steps S11, S13), the controller 60 excites only the solenoids 86a, 88a of the electromagnetic switching valves 86, 86 while not exciting the solenoids 86b, 88b (Step S15'). Thus, both electromagnetic switching valves 88, 86 are switched to the left positions of FIG. 16A, whereby both ports of the regulator 38 are connected with the tank and the pump capacity of the variable displacement-type hydraulic pump 18 becomes substantially zero.

As described above, according to the apparatuses shown in FIGS. 15 and 16, even if the input of the command signal to the specific solenoid suddenly ceases due to the trouble of the electrical system or the like, the present valve position can be kept by the detect mechanisms 80 provided in the respective electromagnetic switching valves. Thus, inconveniences caused by the inadvertent return of the operating position to the neutral position can be securely avoided. Particularly, it is effective in the case that the speed reducer does not have a transmission mechanism and there is also an advantage of continuing the acceleration and deceleration by means of the accelerator.

However, in such a case, the electromagnetic switching valves cannot be returned to their neutral positions even if the operator operates the shift lever. It is more preferable to construct the controller 60 such that, for example, the transmission 28 shown in FIG. 1 is brought to the neutral state to forcibly decouple the hydraulic motor 26 and the travel wheels 30 when the controller 60 generates a command signal (i.e. the controller 60 and the transmission 28 are caused to function as decoupling means in the apparatus shown in FIG. 1).

If the speed ranges of the transmission 28 include a backward mode, the regulator 38 need not be switched to forward and backward modes, and the regulator 38 having only the forward port can be used. In such a case, the switching valve provided between the regulator 38 and the hydraulic pressure source may have two positions. It goes without saying that, for example, an electromagnetic switching valve of the detent type can be used as it is.

Further, the switching valve provided between the regulator 38 and the hydraulic pressure source is not limited to the electromagnetic switching valve. For example, a pilot switching valve and a manual switching valve can be used as such.

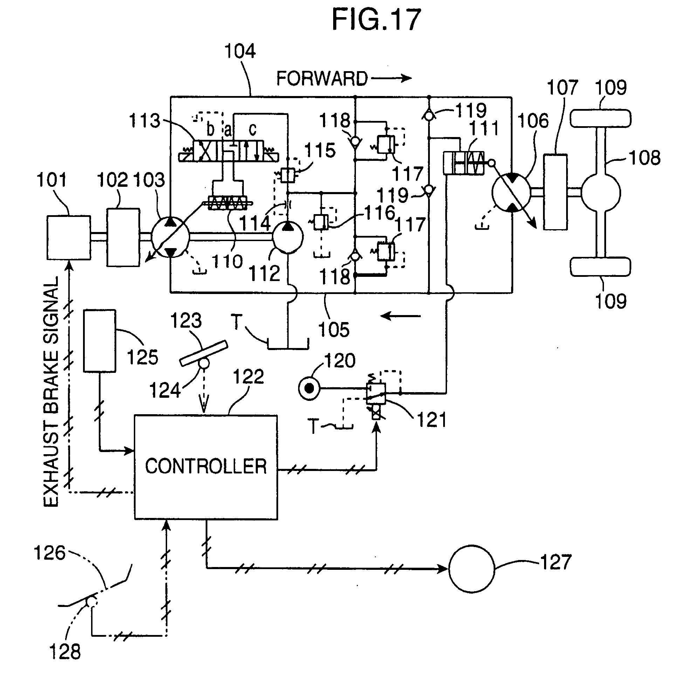

Next, a fourth embodiment of the present invention is described with reference to FIGS. 17 to 20. Since the capacity control of the variable displacement-type hydraulic pump carried out at the time of switching the transmission to the low-speed range in the following embodiments is equivalent to the one shown in the first embodiment, it is not described.

Identified by 101 in FIG. 17 is an engine, which drives a bidirectional main hydraulic pump 103 of the variable displacement type via a speed reducer 102.

Ports at the opposite sides of the main hydraulic pump 103 are connected with a bidirectional hydraulic motor 106 of the variable displacement type via forward and backward sides main pipes 104, 105, thereby forming a closed circuit. The hydraulic motor 106 is driven in forward or backward direction of a vehicle by the main hydraulic pump 103.

A torque of the hydraulic motor 106 is transmitted to left and right drive wheels 109 via a transmission 107 and an axle 108, whereby the vehicle travels.

The inclination of the main hydraulic pump 103 is controlled by a pump regulator 110, whereas that of the hydraulic motor 106 is controlled by a motor regulator 111. The travel is accelerated or decelerated and switched to forward or backward according to changes in the inclinations of the pump 103 and the motor 106.

Specifically, a hydraulic oil from an auxiliary pump 112 driven by the engine 101 is supplied to the pump regulator 110 via an electromagnetic switching valve 113 controllably switched by an unillustrated changeover switch.

This electromagnetic switching valve 113 has a neutral position "a", a forward position "b" and a backward position "c". The pump regulator 110 operates neither toward left nor toward right of FIG. 17 and the inclination of the main hydraulic pump 103 is zero when the electromagnetic switching valve 113 is at the neutral position "a". In this state, the pressure oil is supplied to neither of the main pipes 104, 105 and the hydraulic motor 106 is not driven, either. Therefore, the vehicle is in a resting state.

When the electromagnetic switching valve 113 is switched to the forward position "b" in this state, the pump regulator 110 operates toward right of FIG. 17 and the inclination of the main hydraulic pump 103 increases in one direction from 0, whereby the pressure oil is supplied to the main pipe 104. In this way, the hydraulic motor 106 is driven in forward direction and the vehicle travels forward.

On the contrary, when the electromagnetic switching valve 113 is switched to the backward position "c", the pump regulator 110 operates toward left of FIG. 17, whereby the inclination of the main hydraulic pump 103 increases in opposite direction to supply the pressure oil to the main pipe 105. In this way, the hydraulic motor 106 is driven in backward direction and the vehicle travels backward.

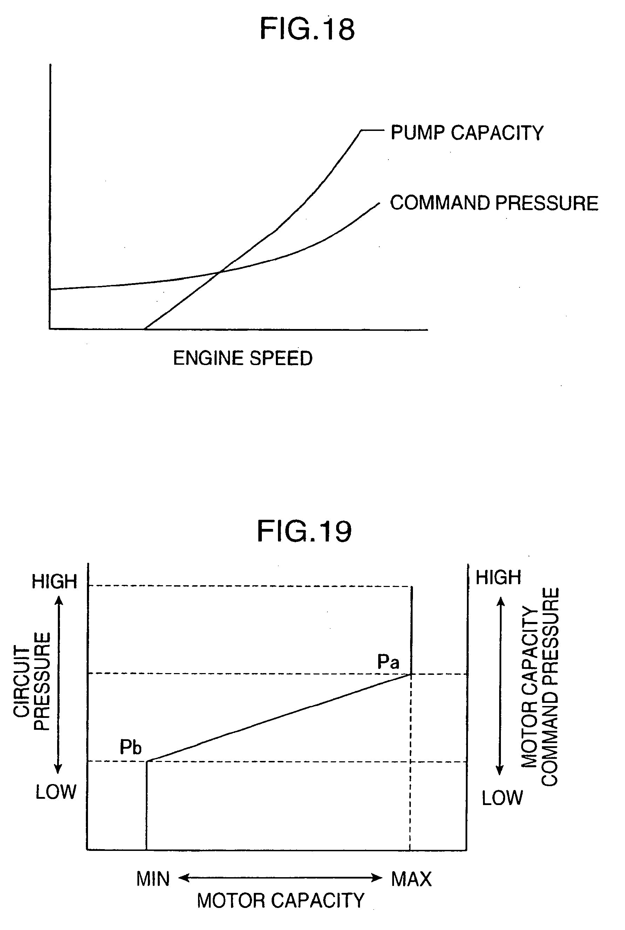

Identified by 114 is a throttle for producing a pressure corresponding to the discharge flow rate of the auxiliary pump 112. The pressure produced by this throttle 114 is reduced by a pressure-reducing valve 115 and supplied as a pump capacity command pressure shown in FIG. 18 to the pump regulator 110 by way of the electromagnetic switching valve 113.

Identified by 116 is a low-pressure relief valve and by 117 are a pair of overload relief valves for restricting a maximum value of a circuit pressure.

Although the main hydraulic pump 103 and the hydraulic motor are connected by the closed circuit, the hydraulic oil in the circuit flows out through drain circuits. Thus, the hydraulic oil from the auxiliary pump 112 is resupplied to both main pipes 104, 105 via check valves 118.

On the other hand, the pressures in the main pipe 104, 105 (circuit pressures) are introduced to the motor regulator 111 as pressures acting in such a direction as to reduce the motor capacity by way of check valves 119, 119, and a motor capacity command pressure shown in FIG. 19 is introduced from an auxiliary hydraulic source 120 via an electromagnetic proportional pressure-reducing valve (hereinafter, "regulator control valve") 121 as a pressure acting in such a direction as to increase the motor capacity.

The opening of the regulator control valve 121 changes in accordance with a command signal from a controller 122 constructing control means, whereby the above capacity command pressure changes.

An acceleration sensor 124 is provided as accelerated amount detecting means for detecting an operated amount of an acceleration pedal 123 (accelerated amount), and an auxiliary braking switch 125 is provided as auxiliary braking selecting means. Signals therefrom are inputted to the controller 122.

Identified by 126 is a brake pedal and by 127 is a brake warning lamp which is turned on when the brake pedal 126 is operated. This apparatus is constructed such that the brake warning lamp 127 is turned on by a signal from the controller 122 while an auxiliary braking action is effected even when the brake pedal 126 is not operated.

Next, the functions of this apparatus are described. Since the capacity control for the main hydraulic pump (variable displacement-type hydraulic pump) 103 at the time of switching the transmission 107 from the high-speed range to the low-speed range is the same as the one shown in the first embodiment, it is not described below.

At the time of normal travel:

When the auxiliary braking switch 125 is not operated, the HST vehicle normally travels.

Specifically, if pressure is exerted on the acceleration pedal 123 with the electromagnetic switching valve 113 switched, for example, to the forward position "b", the speed of the engine 101 increases and the pump capacity command pressure (secondary pressure of the pressure-reducing valve 115) corresponding to the speed of the engine 101 is supplied to the pump regulator 110 by way of the electromagnetic switching valve 113.

This causes the pump regulator 110 to operate and the capacity of the main hydraulic pump 103 increases as the command pressure increases as shown in FIG. 18. Thus, an acceleration pressure is produced in the main pipe 104 at the motor entrance side and the vehicle starts traveling forward.

When the circuit pressure decreases below Pa of FIG. 19 as the vehicle speed increases, the capacity of the hydraulic motor 106 decreases as shown in FIG. 19 and the vehicle further accelerates.

At the time of uphill travel, the pressure in the main pipe 104 increases due to a load according to the gradient of the hill. When the circuit pressure exceeds Pb of FIG. 19, the motor capacity increases and the vehicle speed decreases.

Further, when the acceleration pedal 123 is returned, the capacity of the main hydraulic pump 103 decreases due to a reduction of the pump capacity command pressure resulting from the decreased speed of the engine 101. As a result, a braking pressure is produced in the main pipe 105 at the motor exit side to reduce the vehicle speed.

The braking pressure of the main pipe 105 is normally lower than Pb and the motor capacity remains to be small.

At the time of auxiliary Braking:

If the acceleration pedal 123 is suddenly returned during the travel while the auxiliary braking switch 125 is operated, the auxiliary braking acts.

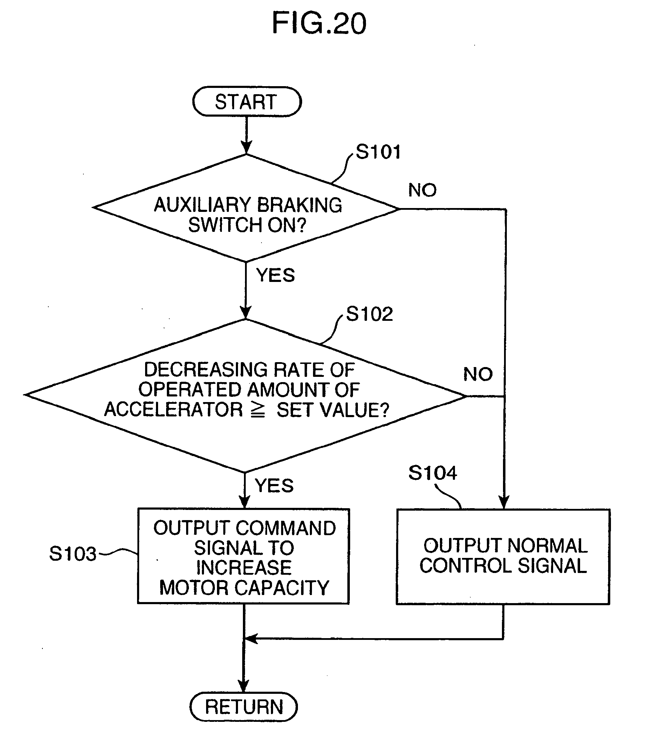

With reference to a flow chart of FIG. 20, if a decreasing degree of the accelerated amount detected by the acceleration sensor 124 is equal to or above a value set beforehand (YES in Step 102) with the auxiliary braking switch 125 turned on (YES in Step S101), a motor capacity increasing signal is sent from the controller 122 to the regulator control valve 121 (Step S103) and a pressure for increasing the motor capacity is supplied from this control valve 121 to the motor regulator 111.

In this way, the capacity of the hydraulic motor 106 increases (e.g. motor capacity reaches its maximum) regardless of the circuit pressure. Thus, the discharge flow rate from this motor 106 increases to produce the braking pressure in the main pipe 105.

At this time, the original braking pressure resulting from the decrease of the pump capacity is produced in the main pipe 105 by the return of the acceleration pedal 123 as described. Therefore, a larger braking force, which is a sum of the above braking forces, acts than at the time of normal travel, and this braking force is converted into a torque by the main hydraulic pump 103 and transmitted to the engine 101, wherefore the vehicle decelerates at a larger rate of deceleration.

A control signal for the normal travel is sent from the controller 122 to the regulator control valve 121 (Step S104) if the auxiliary braking switch 125 is off and if the decreasing degree of the accelerated amount is below the set value.

In this way, an auxiliary braking function similar to general heavy vehicles can be obtained in the HST vehicle, with the result that an abrasion of brake pads and an occurrence of vapor lock can be prevented at the time of traveling down a long slope.

Further, the brake warning lamp 127 is turned on by the signal from the controller 122 to show a largely braking state to vehicles traveling behind, thereby avoiding a collision.

Following embodiments may be adopted for the auxiliary braking.

1) Although the operation of suddenly returning the acceleration pedal 123 is assumed to be "the operator's auxiliary braking operation for the purpose of effecting the auxiliary braking" and the auxiliary braking is caused to act during such an operation in the fourth embodiment, the auxiliary braking may be, instead, caused to act by assuming that the auxiliary braking operation was performed when the operated amount of the acceleration pedal 123 takes a value equal to or below the set value (e.g. equal to or below a value corresponding to a low-idle position). Alternatively, the auxiliary braking may be caused to act by assuming that the operation of suddenly returning the acceleration pedal 123 and the operation of reducing the operated amount of the acceleration pedal 123 to or below the set value are both the auxiliary braking operations.

Further, a brake sensor 128 for detecting the operation of the brake pedal 126 may be provided as shown in FIG. 17, and the auxiliary braking may be caused to act during the braking operation in accordance with a signal sent from the brake sensor 128 to the controller 122. Instead of the operation of the brake pedal 126, the braking itself may be detected to judge whether or not the auxiliary braking operation is being performed.

2) While the auxiliary braking is acting, an exhaust brake signal may be sent from the controller 122 to the engine 101 as shown in phantom in FIG. 17 automatically or in accordance with the selection made by the operator by operating a switch or the like, thereby causing exhaust braking used in general heave vehicles to act. Then, an even larger braking force can be obtained by adding the exhaust braking for the auxiliary braking by the increase of the motor capacity, and its effect is exhibited during the travel on a steep and long downward slope or the like.

3) Although the electromagnetic proportional pressure-reducing valve is used as the regulator control valve 121 for controlling the motor regulator 111 in the fourth embodiment, an electromagnetic switching valve switchable to a position where pressure is given to the motor regulator 111 and a position where no pressure is given thereto may be used.

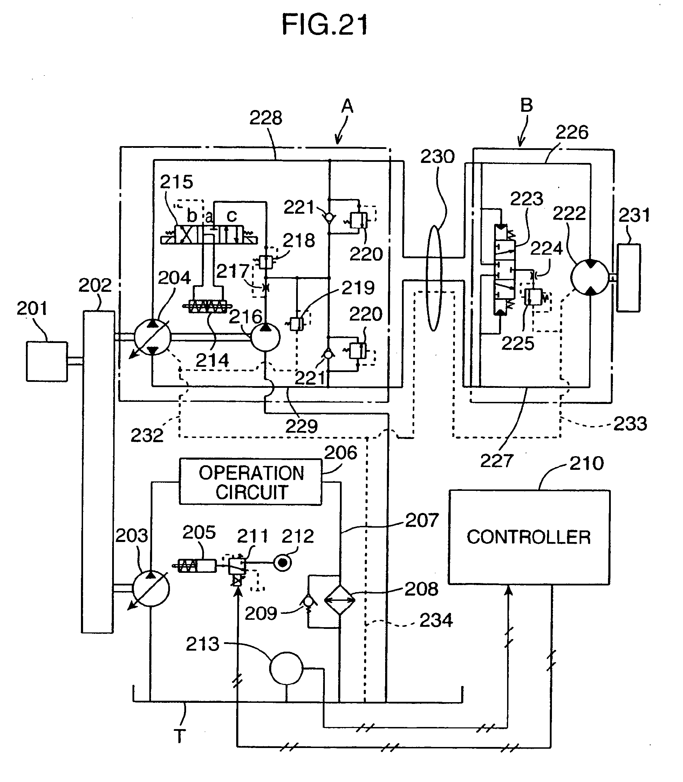

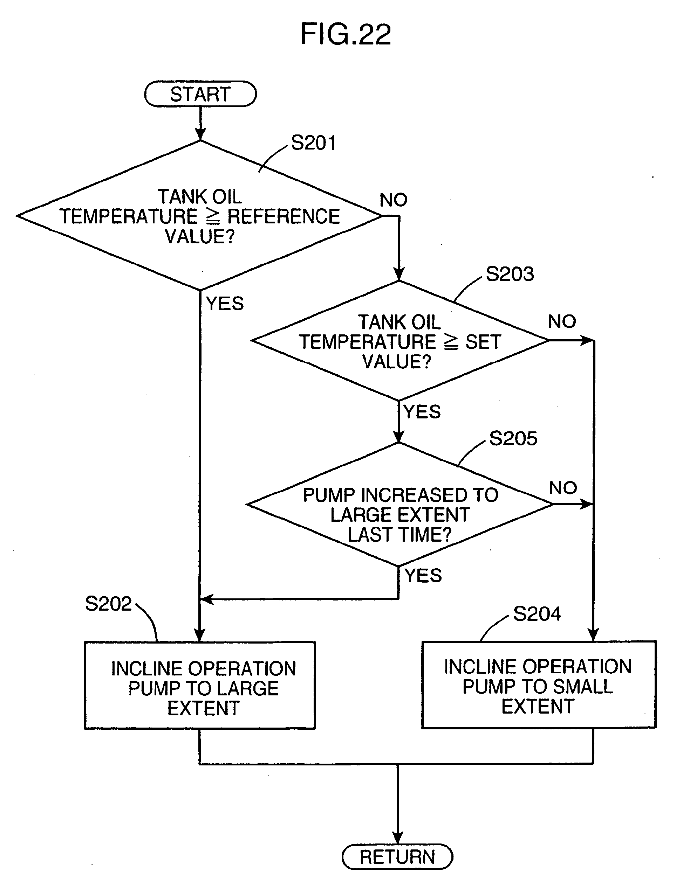

Next, a fifth embodiment of the present invention is described with reference to FIGS. 21 and 22.

Identified by 201 in FIG. 21 is an engine, which drives an operation hydraulic pump (hereinafter, "operation pump") 203 and a travel hydraulic pump (hereinafter, "travel pump") 204 via a power distributor 202.

The operation pump 203 is constructed as a variable displacement-type pump whose inclination is controlled by an operation pump regulator 205, and a plurality of unillustrated hydraulic actuators (a boom lifting cylinder, a winch motor, a rotary motor, etc., taking a rough terrain crane as an example) for operation provided in an operation circuit 206 are driven by hydraulic oil from the pump 203.

An oil cooler 208 is provided in a tank line 207 of the operation circuit 206, and the return oil discharged from the actuators of the operation circuit 206 is cooled by this oil cooler 208 and returned to an oil tank T. Identified by 209 is a check valve disposed in parallel with the oil cooler 208.

The operation pump regulator 205 is connected with a pilot pressure source 212 via an electromagnetic proportional valve 211 controlled by a controller 210, and the secondary pressure of the electromagnetic proportional valve 211 is changed in accordance with a signal from the controller 210 depending on the tank oil temperature detected by an oil temperature sensor 213, whereby an operation stroke of the operation pump regulator 205 changes to controllably increase or decrease the inclination of the pump (this point will be described in detail later).

On the other hand, the travel pump 204 is constructed as a bidirectional variable displacement-type pump whose inclination is controlled by a travel pump regulator 214.

A travel circuit having the travel pump 204 as a hydraulic source is formed by a pump circuit A and a motor circuit B. The pump circuit A is installed on an upper rotating body together with the operation pump 203, the operation circuit 206 and related devices, and the motor circuit B is installed on a lower traveling body.

The pump circuit A includes the travel pump 204, an electromagnetic switching valve 215 for controlling the operation of the travel pump regulator 214 in accordance with signals from the controller 210, an auxiliary pump (oil resupplying pump) 216 of the fixed displacement-type for pumping up the oil from the oil tank T, a throttle 217 for producing a pressure corresponding to a discharge amount of the auxiliary pump 216, a pressure-reducing valve 218 for reducing the pressure produced by the throttle 217 and supplying it to the travel pump regulator 214 by way of the electromagnetic switching valve 215, a low-pressure relief valve 219, a pair of overload relief valves 220 for restricting a maximum value of the circuit pressure, and a pair of check valves 221 for resupplying a part of the oil from the auxiliary pump 216 to the circuit.

The motor circuit B includes a travel hydraulic motor (hereinafter, "travel motor") 222, a flushing valve 223 for discharging an excessive oil to the outside of the circuit, and a throttle 224 and a flow rate control valve 225 provided downstream of the flushing valve 223. Motor pipes 226, 227 at the opposite sides of the motor circuit B and main pipes 228, 229 at the opposite sides of the pump circuit A are connected via a swivel joint 230, thereby forming a closed circuit.

Identified by 231 is a travel speed reducer for reducing a torque of the travel motor 222 and transmitting the reduced torque to unillustrated drive wheels. A control operation at the time of switching this travel speed reducer 231 from the high-speed range to the low-speed range is as described in the first embodiment.

The pump circuit A is provided with a pump-side drain pipe 232 into which oil leaked from the travel pump 204 and relief oil from the pressure-relief valve 219 flow, whereas the motor circuit B is provided with a motor-side drain pipe 233 into which oil leaked from the travel motor 222 and oil discharged from the flushing valve 223 flow. The two drain pipes 232, 233 are connected with the tank T via the swivel joint 230 and a junction drain pipe 234.

In this way, since the drain pipes 232, 233, 234 are connected with the tank T on the shortest courses, the pipe lengths can be minimized. Accordingly, even in a vehicle having a rotating body at the upper side in which the lengths of the drain pipes are longer, a back pressure produced in the travel circuit can be held down by the drain pipes 232, 233, 234. Thus, back pressure loads of the respective devices (e.g. sealing of the travel motor 222) are reduced, thereby preventing them from being damaged.

In the above construction, when the unillustrated shift lever is operated, the electromagnetic switching valve 215 is switched in accordance with a signal from the controller 210 in response to an operation signal of the shift lever, whereby the oil from the auxiliary pump 216 is supplied to the travel pump regulator 214 by way of the electromagnetic switching valve 215 to increase the inclination of the travel pump 204.

Thus, the oil discharged from the pump 204 is supplied to the motor circuit B to drive the travel motor 222, whereby the vehicle travels.

During this travel, the oil leaked from the travel pump 204 and the travel motor 222 and the oil discharged via the low-pressure relief valve 219 and the flushing valve 223 are returned to the oil tank T via the drain pipes 232, 233 and the junction drain pipe 234.

Although the operation circuit 206 is stopped at this time, the operation pump 203 is driven and the oil discharged from the pump 203 is introduced via the operation circuit 206, cooled by the oil cooler 208, and further circulated back to the pump 203.

The drain oil from the travel circuit is cooled by the circulation of the oil of this operation system and, then, resupplied to the travel circuit by the auxiliary pump 216. Thus, the travel circuit (pump circuit A and motor circuit B) which is a closed circuit including the travel pump 204 and the travel motor 202 is cooled.

Specifically, while the drain pipes 232, 233, 234 are directly connected with the oil tank T without passing through a pump casing and a motor casing as with the known technology, the travel circuit can be cooled to be kept at a suitable temperature by the low-temperature oil having passed the oil cooler 208.

In this case, since the large flowing amount of oil discharged from the operation pump 203 is cooled by the oil cooler 208, the tank oil temperature can be efficiently cooled, whereby the travel circuit can be efficiently cooled.

In this embodiment, the cooling operation is controlled in accordance with the tank oil temperature. This is described also with reference to a flow chart of FIG. 22.

A reference value as a temperature at which the cooling ability should be increased and a set value lower than this reference value are determined for the oil temperature beforehand. In Step S201, the tank oil temperature detected by the tank oil sensor 213 and the reference value are compared.

If the judgment result is affirmative, i.e. if the tank oil temperature is equal to or higher than the reference value, the operation pump regulator 205 is commanded to incline the operation pump 203 to a large extent via the electromagnetic proportional valve 211 in Step S202.

This causes the discharge amount of the operation pump 203 to increase and the large flowing amount of oil is cooled by the coil cooler 208. Thus, the oil temperature quickly decreases to improve the cooling ability of the travel circuit.

On the other hand, if the judgment result is negative in Step S201 (below the reference value), whether or not the tank oil temperature is equal to or above the set value is further judged in Step S203. If the judgment result is negative (below the set value), the operation pump 203 is controlled to be inclined to a small extent (e.g. minimally inclined) in Step S204 since the cooling ability needs not be improved.

On the contrary, if the tank oil temperature is judged to be equal to or above the set value in Step S203, whether or not the pump 203 was controlled to be inclined to the large extent last time is judged in Step S205. The operation pump 203 is controlled to be inclined to the small extend in Step S204 if the judgment result is negative, while being controlled to be inclined to the larger extent in Step S202 if it is affirmative.

By this control of Step S203 -> Step S205 -> Step S202, the operation pump 203 is kept inclined to the large extent until the tank oil temperature falls below the set value when being controlled to be inclined to the large extent once.

By controlling the cooling ability according to the tank oil temperature in this way, the travel circuit can be efficiently cooled and better kept at suitable temperatures.

Although the inclination of the operation pump 203 is switched only to two extents: large extent and small extent in the above example, the inclination of the pump 203 may be changed in three or more steps or continuously as the tank oil temperature changes.

In the case of switching the inclination of the pump only to the two large and small extents, an oil temperature switch which is turned on (or off) at a set temperature may be used instead of the oil temperature sensor 213 and an electromagnetic switching valve may be used instead of the electromagnetic proportional valve 211. In such a case, the electromagnetic switching valve may be directly switched by the turning-on or turning-off of the oil temperature switch without via the controller 210.

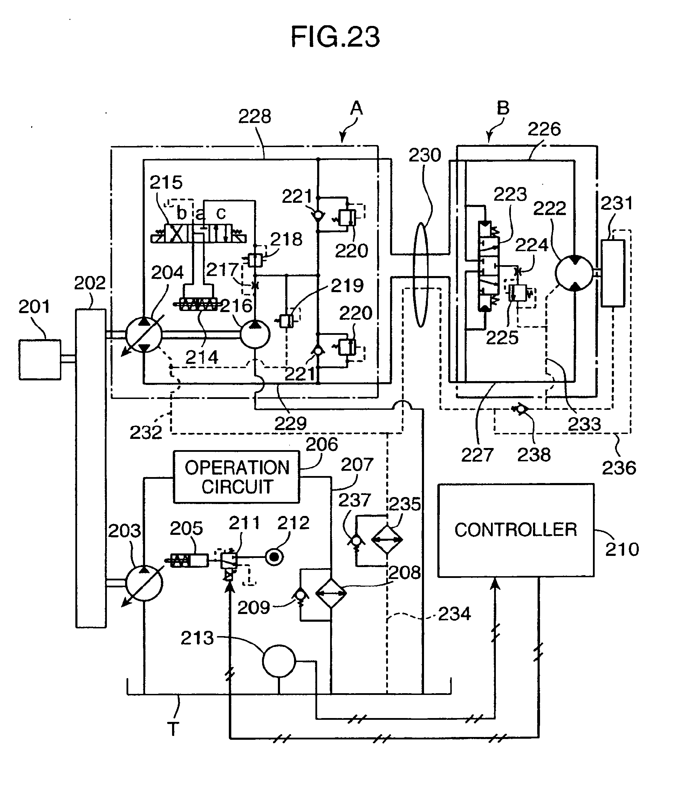

Next, a sixth embodiment is described only about points of difference from the fifth embodiment with reference to FIG. 23.

In addition to the construction of the fifth embodiment, the sixth embodiment is provided with constructions:

a. to cool the drain oil returning from the travel circuit to the oil tank by an oil cooler for its own, and
b. to simultaneously cool the travel speed reducer 231.

Specifically, the junction drain pipe 234 is provided with an auxiliary oil cooler 235 for drain, and a speed-reducer cooling pipe 236 passing through the travel speed reducer 231 is branched off from the drain pipe 233 of the motor circuit B.

Identified by 237 is a check valve disposed in parallel with the auxiliary oil cooler 235, and by 238 is a check valve for hindering the reverse flow of the oil from the speed-reducer cooling pipe 236 toward the travel motor 222.

With this construction, the drain oil from the travel circuit returns to the oil tank T after being cooled by the auxiliary oil cooler 235 and, thereafter, receives the main cooling action by the operation pump 203 and the oil cooler 208, whereby the cooling effect is improved. This is particularly effective in a vehicle in which the main cooling action is possibly insufficient because the maximum discharge amount of the operation pump 203 is small.

Further, since the drain oil is supplied to the travel speed reducer 231 via the speed-reducer cooling pipe 236 to cool the travel speed reducer 231, the overheating of the travel speed reducer 231 can also be prevented.

The auxiliary oil cooler 235 may be arranged together with the oil cooler 208 before a radiator in an engine compartment so as to be cooled by a common fan. In such a case, the two oil coolers 208, 235 may be arranged side by side or one after the other before the radiator.

**Claims**

1. A hydraulic travel drive apparatus, comprising:

a closed circuit including a variable displacement-type hydraulic pump (18) driven by an engine (12) and a hydraulic motor (26) coupled to travel wheels (30) of a vehicle via a transmission (28), and
capacity operating means (40) for increasing the capacity of the variable displacement-type hydraulic pump (18) as the speed of the engine increases, **characterized in that**
the capacity operating means (40) includes capacity increasing means for temporarily making the capacity of the variable displacement-type hydraulic pump (18) larger at the time of switching the transmission (28) from a high-speed range to a low-speed range than in other operating conditions.

2. A hydraulic travel drive apparatus according to claim 1, wherein the capacity increasing means starts increasing the capacity of the variable displacement-type hydraulic pump at or before a timing of switching the transmission from the high-speed range to the low-speed range and stops increasing the capacity of the variable displacement-type hydraulic pump at the end of the switch to the low-speed range or upon the lapse of a specified period after the end of the switch.

3. A hydraulic travel drive apparatus according to claim 1, wherein the capacity increasing means gradually decreases the capacity of the variable displacement-type hydraulic pump after increasing it when the transmission is switched from the high-speed range to the low-speed range.

4. A hydraulic travel drive apparatus according to claim 1, wherein:

the capacity operating means includes a regulator for increasing the capacity of the variable displacement-type hydraulic pump upon receiving the supply of a hydraulic pressure such that the higher the hydraulic pressure, the larger the capacity; a hydraulic pressure source for supplying the hydraulic pressure to the regulator, a pressure-reducing valve provided between the hydraulic pressure source and the regulator for reducing the hydraulic pressure supplied from the hydraulic pressure source to a pressure corresponding to a command signal inputted thereto and introducing the reduced hydraulic pressure to the regulator, and pressure controlling means for inputting the command signal to the pressure-reducing valve such that the secondary pressure of the pressure-reducing valve increases as the speed of the engine increases, and

the pressure controlling means includes pressure increasing means for temporarily making the secondary pressure of the pressure-reducing valve larger at the time of switching the transmission from the high-speed range to the low-speed range than in other normal operating conditions.

5. A hydraulic travel drive apparatus according to claim 4, the pressure controlling means has a plurality of characteristics as those of the command signal for the speed of the engine saved therein, selects the characteristic corresponding to an operating condition of the vehicle out of these characteristics, and determines the command signal in accordance with the selected characteristic.

6. A hydraulic travel drive apparatus according to claim 4, wherein:

the capacity operating means includes a capacity operating hydraulic pump as another hydraulic pressure source different from the hydraulic pressure source connected with the pressure-reducing valve, the hydraulic pump being connected with an output shaft of the engine to increase a discharge pressure thereof as the speed of the engine increases; and a higher pressure selecting portion for introducing a higher one of a hydraulic pressure supplied from the capacity operating hydraulic pump and a hydraulic pressure supplied from a secondary side of the pressure-reducing valve to the regulator, and

a characteristic of the secondary pressure of the pressure-reducing valve is set such that the secondary pressure of the pressure-reducing valve is constantly higher than the hydraulic pressure supplied from the capacity operating hydraulic pump.

7. A hydraulic travel drive apparatus according to claim 1, wherein:

the capacity operating means includes a capacity operating hydraulic pump which is coupled to an output shaft of the engine and whose discharge pressure increases as the speed of the engine increases; a regulator for operating the capacity of the variable displacement-type hydraulic pump upon receiving the supply of the hydraulic pressure from the capacity operating hydraulic pump and increasing the capacity such that the higher the hydraulic pressure, the larger the capacity, and

the capacity operating means further includes, as the capacity increasing means, a high pressure source for supplying a hydraulic pressure higher than the capacity operating hydraulic pump; hydraulic pressure supply switching means for switching to a state where the hydraulic pressure is supplied from the capacity operating hydraulic pump to the regulator and to a state where the hydraulic pressure is supplied from the high pressure source to the regulator; and switch controlling means for switching the hydraulic supply switching means to the state where the hydraulic pressure is supplied from the high pressure source to the regulator at the time of switching the transmission from the high-speed range to the low-speed range while switching the hydraulic supply switching means to the state where the hydraulic pressure is supplied from the capacity operating hydraulic pump to the regulator in the other operating conditions.

8. A hydraulic travel drive apparatus according to claim 7, wherein the hydraulic pressure supply switching means includes a switching valve switchable to a permitting state where the supply of the hydraulic pressure from the high pressure source to the regulator is permitted and a shutoff state where this supply is shut off, and a higher pressure selecting portion for introducing a higher one of the hydraulic pressure outputted from the switching valve and the hydraulic pressure supplied form the capacity operating hydraulic pump to the regulator, and the switch controlling means switches the switching valve to the permitting state at the time of switching the transmission from the high-speed range to the low-speed range while switching the switching valve to the shutoff state in the other operating conditions.

9. A hydraulic travel drive apparatus according to claim 1, wherein:

a variable displacement-type hydraulic motor is provided as the hydraulic motor, the apparatus further comprises a regulator for controlling the capacity of the variable displacement-type hydraulic motor and controlling means for controlling the operation of the regulator, and

the controlling means operates the regulator in such a direction as to increase a motor capacity when an operator performs an auxiliary braking operation to effect auxiliary braking.

10. A hydraulic travel drive apparatus according to claim 9, wherein the controlling means includes auxiliary braking operation detecting means for detecting the auxiliary braking operation and a controller for outputting an operation command signal to operate the regulator in such a direction as to increase the motor capacity when the auxiliary braking operation is detected by the auxiliary braking operation detecting means.

11. A hydraulic travel drive apparatus according to claim 10, wherein the auxiliary braking operation detecting means detects an operated amount of an accelerator for governing the speed of the engine, and the controller outputs the operation command signal by assuming that the auxiliary braking operation was performed when a decreasing rate of the detected operated amount of the accelerator becomes equal to or above a set value.

12. A hydraulic travel drive apparatus according to claim 10, wherein the auxiliary braking operation detecting means detects an operated amount of an accelerator for governing the speed of the engine, and the controlling means outputs the operation command signal by assuming that the auxiliary braking operation was performed when the detected operated amount of the accelerator becomes equal to or below a set value.

13. A hydraulic travel drive apparatus according to claim 10, wherein the auxiliary braking operation detecting means detects a braking operation, and the controlling means outputs the operation command signal by assuming that the auxiliary braking operation was performed when the braking operation was detected.

14. A hydraulic travel drive apparatus according to claim 9, further comprising auxiliary braking selecting means, wherein the controlling means operates the regulator in such a direction as to increase the motor capacity on the condition that the auxiliary braking was selected by the auxiliary braking selecting means.

15. A hydraulic travel drive apparatus according to claim 9, wherein the controlling means causes the exhaust brake of the engine to act when the auxiliary braking operation was performed.

16. A hydraulic travel drive apparatus according to claim 9, wherein the controlling means turns a brake warning lamp on simultaneously when causing the regulator to operate in such a direction as to increase the motor capacity.

17. A hydraulic travel drive apparatus according to claim 1, further comprising abnormality detecting means for detecting abnormality in the capacity operation by the capacity operating means, and decoupling means for decoupling the hydraulic motor and the travel wheels when the abnormality in the capacity operation was detected by the abnormality detecting means.

18. A hydraulic travel drive apparatus according to claim 1, wherein:

the capacity operating means includes a regulator for operating the capacity of the variable displacement-type hydraulic pump by receiving the supply of the hydraulic pressure; a hydraulic pressure source for supplying the hydraulic pressure to the regulator; a switching valve having, as switched positions, a permitting position for permitting the supply of the hydraulic pressure from the high pressure source to the regulator and a shutoff position for shutting off the supply of the hydraulic pressure; and switch operating means for switching the switching valve by inputting a command signal, and
the switching valve is held at the present position thereof when the input of the command signal ceases.

19. A hydraulic travel vehicle, comprising:

a lower traveling body,
an upper rotating body rotatably installed on the lower traveling body, and
a hydraulic travel drive apparatus according to claim 1 as an apparatus for driving the lower traveling body.

20. A hydraulic travel vehicle according to claim 19, wherein:

the upper rotating body includes a travel hydraulic pump and an operation hydraulic pump as the variable displacement-type hydraulic pump, an operation circuit for driving an operation hydraulic actuator using the operation hydraulic pump as a hydraulic pressure source, an oil tank and an oil cooler for cooling the hydraulic oil returning from the operation circuit to the oil tank, the lower traveling body includes the hydraulic motor as a travel driving source, the hydraulic motor and the travel hydraulic pump are connected via a swivel joint to form a travel circuit as a closed circuit, a drain pipe for directly returning a drain oil of the travel circuit to the oil tank, an oil resupply pump for resupplying the hydraulic oil to the travel circuit from the oil tank are further provided, and the hydraulic oil discharged from the operation hydraulic pump is circulated between the operation circuit and the oil tank by way of the oil cooler and the hydraulic oil in the oil tank is resupplied to the travel circuit by the oil resupply pump during the travel.

**Patentansprüche**

1. Hydraulische Fahrantriebsvorrichtung mit einem geschlossenen Kreislauf mit einer durch eine Antriebsmaschine (12) angetriebenen hydraulischen Verstellverdrängerpumpe (18), sowie einem Hydromotor (26), der über ein Getriebe (28) an Laufräder (30) eines Fahrzeugs gekoppelt ist, und einer Durchsatzstelleinrichtung (40) zum Steigern des Durchsatzes der hydraulischen Verstellverdrängerpumpe (18), mit steigender Drehzahl der Antriebsmaschine, **dadurch gekennzeichnet, dass** die Durchsatzstelleinrichtung (40) eine Durchsatzsteigerungseinrichtung hat, die vorübergehend, zum Schaltzeitpunkt des Getriebes (28) von einem Hochdrehzahlbereich zu einem Niederdrehzahlbereich, den Durchsatz der hydraulischen Verstellverdrängerpumpe (18) größer macht als bei anderen Betriebsbedingungen.

2. Hydraulische Fahrantriebsvorrichtung nach Anspruch 1, wobei die Durchsatzsteigerungseinrichtung das Steigern des Durchsatzes der hydraulischen Verstellverdrängerpumpe zu einem oder vor einem Schaltzeitpunkt des Getriebes von einem Hochdrehzahlbereich zu einem Niederdrehzahlbereich beginnt und das Steigern des Durchsatzes der hydraulischen Verstellverdrängerpumpe zum Ende des Schaltens zu dem Niederdrehzahlbereich, oder nach Ablauf einer festgelegten Zeitspanne, nach dem Ende des Schaltens beendet.

3. Hydraulische Fahrantriebsvorrichtung nach Anspruch 1, wobei die Durchsatzsteigerungseinrichtung den Durchsatz der hydraulischen Verstellverdrängerpumpe allmählich verringert, nachdem sie ihn gesteigert hat, während das Getriebe von dem Hochdrehzahlbereich zu dem Niederdrehzahlbereich geschaltet wurde.

4. Hydraulische Fahrantriebsvorrichtung nach Anspruch 1, wobei die Durchsatzstelleinrichtung einen Regler zum Steigern des Durchsatzes der hydraulischen Verstellverdrängerpumpe nach Erhalt der Zufuhr des hydraulischen Drucks hat, wobei der Durchsatz umso größer ist, je höher der hydraulische Druck ist; eine hydraulische Druckquelle zum Zuführen des hydraulischen Drucks zu dem Regler, ein zwischen der hydraulischen Druckquelle und dem Regler vorgesehenes Druckminderungsventil, zum Reduzieren des hydraulischen Drucks, der von der hydraulischen Druckquelle geliefert wird, auf einen Druck, der einem ihm eingegebenen Steuersignal zugeordnet ist, und zum Einlassen des reduzierten hydraulischen Drucks zu dem Regler, sowie eine Drucksteuereinrichtung hat, zum Eingeben des Steuersignals in das Druckminderungsventil, so dass der Sekundärdruck des Druckminderungsventils mit steigender Drehzahl der Antriebsmaschine steigt, und die Drucksteuereinrichtung eine Drucksteigerungseinrichtung hat, die vorübergehend, zum Schaltzeitpunkt des Getriebes von dem Hochdrehzahlbereich zu dem Niederdrehzahlbereich, den Sekundärdruck des Druckminderungsventils größer macht als bei anderen, normalen Betriebsbedingungen.

5. Hydraulische Fahrantriebsvorrichtung nach Anspruch 4, wobei die Drucksteuereinrichtung eine Vielzahl von Kennlinien, wie die des Steuersignals für die Drehzahl der Antriebsmaschine darin gespeichert hat, die einer Betriebsbedingung des Fahrzeugs zugeordnete Kennlinie aus diesen Kennlinien auswählt, sowie das Steuersignal in Übereinstimmung mit der ausgewählten Kennlinie bestimmt.

6. Hydraulische Fahrantriebsvorrichtung nach Anspruch 4, wobei die Durchsatzstelleinrichtung eine hydraulische Durchsatzstellpumpe, als eine weitere hydraulische Druckquelle, die von der mit dem Druckminderungsventil verbundenen hydraulischen Druckquelle verschieden ist, wobei die hydraulische Pumpe mit einer Ausgangswelle der Antriebsmaschine verbunden ist, um mit steigender Drehzahl der Antriebsmaschine ihren Ausgangsdruck zu steigern; sowie einen Hochdruckauswahlabschnitt hat, zum Einlassen eines höheren des hydraulischen Drucks, der von der hydraulischen Durchsatzstellpumpe geliefert wird, und des hydraulischen Drucks, der von einer Sekundärseite des Druckminderungsventils zu dem Regler geliefert wird, und wobei eine Kennlinie des Sekundärdrucks des Druckminderungsventils so festgelegt ist, dass der Sekundärdruck des Druckminderungsventils durchgehend höher ist, als der hydraulische Druck, der von der hydraulischen Durchsatzstellpumpe geliefert wird.

7. Hydraulische Fahrantriebsvorrichtung nach Anspruch 1, wobei die Durchsatzstelleinrichtung eine hydraulische Durchsatzstellpumpe, die an eine Ausgangswelle der Antriebsmaschine gekoppelt ist, und deren Ausgangsdruck mit steigender Drehzahl der Antriebsmaschine steigt; und einen Regler hat, zum Stellen des Durchsatzes der hydraulischen Verstellverdrängerpumpe, nach Erhalt der Zufuhr des hydraulischen Drucks von der hydraulischen Durchsatzstellpumpe, sowie zum Steigern des Durchsatzes, wobei der Durchsatz umso größer ist, je höher der hydraulische Druck ist, und wobei die Durchsatzstelleinrichtung ferner eine Hochdruckquelle, als Durchsatzsteigerungseinrichtung, zum Zuführen eines höheren hydraulischen Drucks als die hydraulische Durchsatzstellpumpe; eine hydraulische Druckzufuhrumschalteinrichtung zum Umschalten in einen Zustand, in dem der hydraulische Druck von der hydraulischen Durchsatzstellpumpe zu dem Regler geliefert wird, und in einen Zustand, in dem der hydraulische Druck von der Hochdruckquelle zu dem Regler geliefert wird; sowie eine Umschaltsteuereinrichtung hat, zum Umschalten der hydraulischen Zufuhrumschalteinrichtung in den Zustand, in dem der hydraulische Druck von der Hochdruckquelle zu dem Regler geliefert wird, zum Schaltzeitpunkt des Getriebes von dem Hochdrehzahlbereich zu dem Niederdrehzahlbereich, wohingegen die hydraulische Zufuhrumschalteinrichtung bei den anderen Betriebsbedingungen in den Zustand umgeschaltet wird, bei dem der hydraulische Druck von der hydraulischen Durchsatzstellpumpe zu dem Regler geliefert wird.

8. Hydraulische Fahrantriebsvorrichtung nach Anspruch 7, wobei die hydraulische Druckzufuhrumschalteinrichtung ein Umschaltventil, das in einen Freigabezustand umschaltbar ist, in dem die Zufuhr des hydraulischen Drucks von der Hochdruckquelle zu dem Regler freigegeben ist, und einen Absperrzustand, in dem diese Zufuhr abgesperrt ist, sowie einen Hochdruckauswahlabschnitt hat, zum Einlassen eines höheren des hydraulischen Drucks, der von dem Umschaltventil ausgegeben wird, und des hydraulischen Drucks, der von der hydraulischen Durchsatzstellpumpe zu dem Regler geliefert wird, und wobei die Umschaltsteuereinrichtung das Umschaltventil in den Freigabezustand zum Schaltzeitpunkt des Getriebes von dem Hochdrehzahlbereich zu dem Niederdrehzahlbereich umschaltet, wohingegen das Umschaltventil bei den anderen Betriebsbedingungen in den Absperrzustand umgeschaltet wird.

9. Hydraulische Fahrantriebsvorrichtung nach Anspruch 1, wobei
ein hydraulischer Verstellverdrängermotor als der Hydromotor vorgesehen ist,
die Vorrichtung ferner einen Regler, zum Steuern des Schluckvolumens des hydraulischen Verstellverdrängermotors, sowie eine Steuereinrichtung zum Steuern des Betriebs des Reglers hat, und wobei
die Steuereinrichtung den Regler in einer Richtung stellt, um ein Motorschluckvolumen zu steigern, wenn ein Bediener einen Hilfsbremsbetrieb durchführt, um eine Hilfsbremsung hervorzurufen.

10. Hydraulische Fahrantriebsvorrichtung nach Anspruch 9, wobei die Steuereinrichtung eine Hilfsbremsbetriebserfassungseinrichtung zum Erfassen des Hilfsbremsbetriebs, sowie ein Steuergerät hat, zum Ausgeben eines Stellsteuersignals, zum Stellen des Reglers in einer Richtung, um ein Motorschluckvolumen zu steigern, wenn der Hilfsbremsbetrieb von der Hilfsbremserfassungseinrichtung erfasst wird.

11. Hydraulische Fahrantriebsvorrichtung nach Anspruch 10, wobei die Hilfsbremsbetriebserfassungseinrichtung ein Betätigungsmaß eines Fahrpedals zum Steuern der Drehzahl der Antriebsmaschine erfasst, und das Steuergerät das Stellsteuersignal ausgibt, unter der Annahme, dass der Hilfsbremsbetrieb durchgeführt wurde, wenn eine Abnahmegeschwindigkeit des erfassten Betätigungsmaßes des Fahrpedals gleich, oder über einem festgelegten Wert ist.

12. Hydraulische Fahrantriebsvorrichtung nach Anspruch 10, wobei die Hilfsbremsbetriebserfassungseinrichtung ein Betätigungsmaß eines Fahrpedals zum Steuern der Drehzahl der Antriebsmaschine erfasst, und die Steuereinrichtung das Stellsteuersignal ausgibt, unter der Annahme, dass der Hilfsbremsbetrieb durchgeführt wurde, wenn das erfasste Betätigungsmaß des Fahrpedals gleich, oder unter einem festgelegten Wert ist.

13. Hydraulische Fahrantriebsvorrichtung nach Anspruch 10, wobei die Hilfsbremsbetriebserfassungseinrichtung einen Bremsbetrieb erfasst und die Steuereinrichtung das Stellsteuersignal ausgibt, unter der Annahme, dass der Hilfsbremsbetrieb durchgeführt wurde, wenn der Bremsbetrieb erfasst wurde.

14. Hydraulische Fahrantriebsvorrichtung nach Anspruch 9, ferner mit einer Hilfsbremsauswahleinrichtung, wobei die Steuereinrichtung den Regler in einer Richtung stellt, um das Motorschluckvolumen unter der Bedingung zu steigern, dass die Hilfsbremsung durch die Hilfsbremsauswahleinrichtung ausgewählt wurde.

15. Hydraulische Fahrantriebsvorrichtung nach Anspruch 9, wobei die Auspuffklappenbremse der Antriebsmaschine durch die Steuereinrichtung betätigt wird, wenn der Hilfsbremsbetrieb durchgeführt wurde.

16. Hydraulische Fahrantriebsvorrichtung nach Anspruch 9, wobei die Steuereinrichtung eine Bremswarnleuchte zeitgleich einschaltet, während sie den Regler in einer Richtung stellt, um ein Motorschluckvolumen zu steigern.

17. Hydraulische Fahrantriebsvorrichtung nach Anspruch 1, ferner mit einer Anomalitätserfassungseinheit zum Erfassen einer Anomalie in der Durchsatzbetätigung der Durchsatzstelleinrichtung, sowie einer Entkopplungseinrichtung zum Entkoppeln des Hydromotors und der Laufräder, wenn die Anomalie in der Durchsatzbetätigung durch die Anomalitätserfassungseinheit erfasst wurde.

18. Hydraulische Fahrantriebsvorrichtung nach Anspruch 1, wobei
die Durchsatzstelleinrichtung einen Regler zum Stellen des Durchsatzes der hydraulischen Verstellverdrängerpumpe durch Erhalt der Zufuhr des hydraulischen Drucks; eine hydraulische Druckquelle zum Zuführen des hydraulischen Drucks zu dem Regler; ein Umschaltventil mit, indem die Positionen umgeschaltet werden, einer Freigabeposition, zum Freigeben der Zufuhr des hydraulischen Drucks von der Hochdruckquelle zu dem Regler und einer Absperrposition, zum Absperren der Zufuhr des hydraulischen Drucks; sowie eine Umschaltstelleinrichtung hat, zum Umschalten des Umschaltventils durch Eingeben eines Steuersignals, und wobei das Umschaltventil in seiner gegenwärtigen Position gehalten wird, wenn das Eingeben des Steuersignals endet.

19. Fahrzeug mit hydraulischem Fahrantrieb mit einem unteren Fahrkörper,
einem oberen Drehkörper, der drehbar auf dem unteren Fahrkörper installiert ist, und
einer hydraulischen Fahrantriebsvorrichtung nach Anspruch 1, als Vorrichtung zum Antreiben des unteren Fahrkörpers.

20. Fahrzeug mit hydraulischem Fahrantrieb nach Anspruch 19, wobei
der obere Drehkörper eine hydraulische Fahrpumpe und eine hydraulische Stellpumpe, als die hydraulische Verstellverdrängerpumpe, einen Betriebskreislauf zum Antreiben eines hydraulischen Betriebsbetätigungselements, das die hydraulische Stellpumpe als eine hydraulische Druckquelle nutzt, einen Ölbehälter, sowie einen Ölkühler hat, zum Kühlen des hydraulischen Öls, das von dem Betriebskreislauf zum Ölbehälter zurückkehrt,
wobei der untere Fahrkörper den Hydromotor als Fahrantriebsquelle hat,
wobei der Hydromotor und die hydraulische Fahrpumpe über ein Drehgelenk hinweg miteinander verbunden sind, um einen Fahrkreislauf als geschlossenen Kreislauf zu bilden, wobei ferner
eine Ölablaufleitung zur direkten Rückführung eines Ölablaufs des Fahrkreislaufs zum Ölbehälter, sowie eine Ölwiederzuführpumpe für die Wiederzufuhr des hydraulischen Öls zum Fahrkreislauf von dem Ölbehälter vorgesehen sind, und wobei
das hydraulische Öl, das von der hydraulischen Stellpumpe abgeführt wird, zwischen dem Betriebskreislauf und dem Ölbehälter über den Ölkühler zirkuliert und wobei das hydraulische Öl in dem Ölbehälter während der Fahrt durch die Ölwiederzuführpumpe zu dem Fahrkreislauf wieder geliefert wird.

## Revendications

1. Appareil d'entraînement de déplacement hydraulique, comprenant :

un circuit fermé comportant une pompe hydraulique du type à cylindrée variable (18) entraînée par un moteur (12) et un moteur hydraulique (26) couplé à des roues de déplacement (30) d'un véhicule par l'intermédiaire d'une transmission (28), et
un moyen de commande de capacité (40) destiné à augmenter la capacité de la pompe hydraulique du type à cylindrée variable (18) à mesure que la vitesse du moteur augmente, **caractérisé en ce que**
le moyen de commande de capacité (40) comporte un moyen d'augmentation de capacité destiné à rendre temporairement la capacité de la pompe hydraulique du type à cylindrée variable (18) plus grande au moment de la commutation de la transmission (28) d'une plage de vitesse élevée à une plage de vitesse faible que dans d'autres conditions de fonctionnement.

2. Appareil d'entraînement de déplacement hydraulique selon la revendication 1, dans lequel le moyen d'augmentation de capacité commence à augmenter la capacité de la pompe hydraulique du type à cylindrée variable au moment de ou avant la commutation de la transmission de la plage vitesse élevée à la plage de vitesse faible et arrête d'augmenter la capacité de la pompe hydraulique du type à cylindrée variable à la fin de la commutation vers la plage de vitesse faible ou après une période spécifiée après la fin de la commutation.

3. Appareil d'entraînement de déplacement hydraulique selon la revendication 1, dans lequel le moyen d'augmentation de capacité diminue progressivement la capacité de la pompe hydraulique du type à cylindrée variable après l'augmentation de celle-ci lorsque la transmission est commutée de la plage de vitesse élevée à la plage de vitesse faible.

4. Appareil d'entraînement de déplacement hydraulique selon la revendication 1, dans lequel :

le moyen de commande de capacité comporte un régulateur destiné à augmenter la capacité de la pompe hydraulique du type à cylindrée variable lors de la réception de l'alimentation en pression hydraulique de sorte que plus la pression hydraulique soit élevée, plus la capacité soit grande ; une source de pression hydraulique destinée à fournir la pression hydraulique au régulateur, une soupape de réduction de pression prévue entre la source de pression hydraulique et le régulateur pour réduire la pression hydraulique fournie à partir de la source de pression hydraulique jusqu'à une pression correspondant à un signal de commande qui lui est introduit et pour introduire la pression hydraulique réduite au régulateur, et un moyen de commande de pression destiné à introduire le signal de commande à la soupape de réduction de pression de sorte que la pression secondaire de la soupape de réduction de pression augmente à mesure que la vitesse du moteur augmente, et le moyen de commande de pression comporte un moyen d'augmentation de pression destiné à rendre temporairement la pression secondaire de la soupape de réduction de pression plus grande au moment de la commutation de la transmission de la plage de haute vitesse à la plage de vitesse faible que dans d'autres conditions de fonctionnement normales.

**5.** Appareil d'entraînement de déplacement hydraulique selon la revendication 4, le moyen de commande de pression a une pluralité de caractéristiques comme celles du signal de commande pour la vitesse du moteur sauvegardées dans celui-ci, sélectionne la caractéristique correspondant à une condition de fonctionnement du véhicule parmi ces caractéristiques, et détermine le signal de commande en fonction de la caractéristique sélectionnée.

**6.** Appareil d'entraînement de déplacement hydraulique selon la revendication 4, dans lequel :

le moyen de commande de capacité comporte une pompe hydraulique de commande de capacité en tant qu'autre source de pression hydraulique différente de la source de pression hydraulique reliée à la soupape de réduction de pression, la pompe hydraulique étant reliée à un arbre de sortie du moteur pour augmenter sa pression de décharge à mesure que la vitesse du moteur augmente ; et une partie de sélection de la pression la plus élevée destinée à introduire la pression la plus élevée parmi une pression hydraulique fournie à partir de la pompe hydraulique de commande de capacité et une pression hydraulique fournie à partir d'un côté secondaire de la soupape de réduction de pression au régulateur, et

une caractéristique de la pression secondaire de la soupape de réduction de pression est définie de sorte que la pression secondaire de la soupape de réduction de pression soit constamment supérieure à la pression hydraulique fournie à partir de la pompe hydraulique de commande de capacité.

**7.** Appareil d'entraînement de déplacement hydraulique selon la revendication 1, dans lequel :

le moyen de commande de capacité comporte une pompe hydraulique de commande de capacité qui est couplée à un arbre de sortie du moteur et dont la pression de décharge augmente à mesure que la vitesse du moteur augmente ; un régulateur destiné à commander la capacité de la pompe hydraulique du type à cylindrée variable lors de la réception de l'alimentation en pression hydraulique provenant de la pompe hydraulique de commande de capacité et à augmenter la capacité de sorte que plus la pression hydraulique soit élevée, plus la capacité soit grande, et

le moyen de commande de capacité comporte en outre, en tant que moyen d'augmentation de capacité, une source de haute pression destinée à fournir une pression hydraulique plus élevée que celle de la pompe hydraulique de commande de capacité ; un moyen de commutation d'alimentation en pression hydraulique destiné à commuter vers un état dans lequel la pression hydraulique est fournie à partir de la pompe hydraulique de commande de capacité au régulateur et vers un état dans lequel la pression hydraulique est fournie à partir de la source de haute pression au régulateur ; et un moyen de commande de commutation destiné à commuter le moyen de commutation d'alimentation en pression hydraulique vers l'état dans lequel la pression hydraulique est fournie à partir de la source de haute pression au régulateur au moment de la commutation de la transmission de la plage de vitesse élevée à la plage de vitesse faible tout en commutant le moyen de commutation d'alimentation en pression hydraulique vers l'état dans lequel la pression hydraulique est fournie à partir de la pompe hydraulique de commande de capacité au régulateur dans les autres conditions de fonctionnement.

**8.** Appareil d'entraînement de déplacement hydraulique selon la revendication 7, dans lequel le moyen de commutation d'alimentation en pression hydraulique comporte une soupape de commutation pouvant être commutée vers un état de permission dans lequel l'alimentation en pression hydraulique provenant de la source de haute pression au régulateur est autorisée et vers un état d'arrêt dans lequel cette alimentation est arrêtée, et une partie de sélection de la pression la plus élevée destinée à introduire la pression la plus élevée parmi la pression hydraulique délivrée en sortie à partir de la soupape de commutation et la pression hydraulique fournie à partir de la pompe hydraulique de commande de capacité au régulateur, et le moyen de commande de commutation commute la soupape de commutation vers l'état de permission au moment de la commutation de la transmission de la plage de vitesse élevée à la plage de vitesse faible tout en commutant la soupape de commutation vers l'état d'arrêt dans les autres conditions de fonctionnement.

9.  Appareil d'entraînement de déplacement hydraulique selon la revendication 1, dans lequel :

    un moteur hydraulique du type à cylindrée variable est fourni comme étant le moteur hydraulique,
    l'appareil comprend en outre un régulateur destiné à commander la capacité du moteur hydraulique du type à cylindrée variable et un moyen de commande destiné à commander le fonctionnement du régulateur, et
    le moyen de commande fait fonctionner le régulateur dans une direction augmentant une capacité du moteur lorsqu'un opérateur effectue une opération de freinage auxiliaire pour effectuer un freinage auxiliaire.

10. Appareil d'entraînement de déplacement hydraulique selon la revendication 9, dans lequel le moyen de commande comporte un moyen de détection d'opération de freinage auxiliaire destiné à détecter l'opération de freinage auxiliaire et un moyen de commande destiné à délivrer en sortie un signal de commande de fonctionnement pour faire fonctionner le régulateur dans une direction augmentant la capacité du moteur lorsque l'opération de freinage auxiliaire est détectée par le moyen de détection d'opération de freinage auxiliaire.

11. Appareil d'entraînement de déplacement hydraulique selon la revendication 10, dans lequel le moyen de détection d'opération de freinage auxiliaire détecte une quantité d'actionnement d'un accélérateur pour réguler la vitesse du moteur, et le moyen de commande délivre en sortie le signal de commande de fonctionnement en supposant que l'opération de freinage auxiliaire a été effectuée lorsqu'un taux de diminution de la quantité d'actionnement détectée de l'accélérateur devient supérieur ou égal à une valeur de consigne.

12. Appareil d'entraînement de déplacement hydraulique selon la revendication 10, dans lequel le moyen de détection d'opération de freinage auxiliaire détecte une quantité d'actionnement d'un accélérateur pour réguler la vitesse du moteur, et le moyen de commande délivre en sortie le signal de commande de fonctionnement en supposant que l'opération de freinage auxiliaire a été effectuée lorsque la quantité d'actionnement détectée de l'accélérateur devient inférieure ou égale à une valeur de consigne.

13. Appareil d'entraînement de déplacement hydraulique selon la revendication 10, dans lequel le moyen de détection d'opération de freinage auxiliaire détecte une opération de freinage, et le moyen de commande délivre en sortie le signal de commande de fonctionnement en supposant que l'opération de freinage auxiliaire a été effectuée lorsque l'opération de freinage a été détectée.

14. Appareil d'entraînement de déplacement hydraulique selon la revendication 9, comprenant en outre un moyen de sélection de freinage auxiliaire, où le moyen de commande fait fonctionner le régulateur dans une direction augmentant la capacité du moteur à condition que le freinage auxiliaire ait été sélectionné par le moyen de sélection de freinage auxiliaire.

15. Appareil d'entraînement de déplacement hydraulique selon la revendication 9, dans lequel le moyen de commande amène le frein sur échappement du moteur à agir lorsque l'opération de freinage auxiliaire a été effectuée.

16. Appareil d'entraînement de déplacement hydraulique selon la revendication 9, dans lequel le moyen de commande allume un feu de signalisation de freinage simultanément lorsqu'on amène le régulateur à fonctionner dans une direction augmentant la capacité du moteur.

17. Appareil d'entraînement de déplacement hydraulique selon la revendication 1, comprenant en outre un moyen de détection d'anomalie destiné à détecter une anomalie dans la commande de capacité par le moyen de commande de capacité, et un moyen de désaccouplement destiné à désaccoupler le moteur hydraulique et les roues de déplacement lorsque l'anomalie dans la commande de capacité a été détectée par le moyen de détection d'anomalie.

18. Appareil d'entraînement de déplacement hydraulique selon la revendication 1, dans lequel :

    le moyen de commande de capacité comporte un régulateur destiné à commander la capacité de la pompe hydraulique du type à cylindrée variable en recevant l'alimentation en pression hydraulique ; une source de pression hydraulique destinée à fournir la pression hydraulique au régulateur ; une soupape de commutation ayant, en tant que positions de commutation, une position de permission pour permettre l'alimentation en pression hydraulique provenant de la source de haute pression au régulateur et une position d'arrêt pour arrêter l'alimentation en pression hydraulique ; et un moyen de commande de commutation destiné à commuter la soupape de commutation par l'introduction d'un signal de commande, et

la soupape de commutation est maintenue à sa position actuelle lorsque l'entrée du signal de commande s'arrête.

19. Véhicule de déplacement hydraulique, comprenant :

un corps mobile inférieur,
un corps rotatif supérieur monté en rotation sur le corps mobile inférieur, et
un appareil d'entraînement de déplacement hydraulique selon la revendication 1 en tant qu'appareil pour entraîner le corps mobile inférieur.

20. Véhicule de déplacement hydraulique selon la revendication 19, dans lequel :

le corps rotatif supérieur comporte une pompe hydraulique de déplacement et une pompe hydraulique de commande en tant que pompe hydraulique du type à cylindrée variable, un circuit de commande pour entraîner un actionneur hydraulique de commande en utilisant la pompe hydraulique de commande en tant que source de pression hydraulique, un réservoir d'huile et un refroidisseur d'huile destiné à refroidir l'huile hydraulique renvoyée par le circuit de commande vers le réservoir d'huile,
le corps mobile inférieur comporte le moteur hydraulique en tant que source d'entraînement de déplacement,
le moteur hydraulique et la pompe hydraulique de déplacement sont reliés par l'intermédiaire d'un joint à rotule pour former un circuit de déplacement sous la forme d'un circuit fermé.
un tuyau de vidange pour renvoyer directement une huile de vidange du circuit de déplacement vers le réservoir d'huile,
une pompe de réalimentation en huile pour réalimenter l'huile hydraulique au circuit de déplacement depuis le réservoir d'huile sont en outre prévus, et
l'huile hydraulique déchargée à partir de la pompe hydraulique de commande est amenée à circuler entre le circuit de commande et le réservoir d'huile par l'intermédiaire du refroidisseur d'huile et l'huile hydraulique dans le réservoir d'huile est réalimentée au circuit de déplacement par la pompe de réalimentation en huile pendant le déplacement.

# FIG.1

TO OPERATION
CIRCUIT

## FIG.2A

PUMP CAPACITY

B A C

b' b

COMMAND PRESSURE

a

c

Lo ENGINE SPEED Hi

## FIG.2B

ENGINE TORQUE

ENGINE OUTPUT

OUTPUT HORSEPOWER

B A C

Lo ENGINE SPEED Hi

## FIG.2C

DRIVING FORCE F

Hi ENGINE SPEED

LOW-SPEED RANGE

Middle

α

β γ HIGH-SPEED RANGE

B C A

VEHICLE SPEED V

# FIG.3

HIGH-SPEED RANGE    A   B    LOW-SPEED RANGE

GEAR CHANGE
TRANSITION
PERIOD

C

INCREASE
PUMP CAPACITY

ENGINE SPEED
Ne

D

Hi

Lo

PUMP CAPACITY
Dp

max

0

PUMP TAKE-UP
FLOW RATE Qp

max

0

SPEED ROTATING
SPEED Nm

max

0

MOTOR DISCHARGE
FLOW RATE Qm

max

0

CHARGE PUMP
RELIEF PRESSURE

CIRCUIT
PRESSURE P

DECELERATION
RATE a

VEHICLE SPEED V

max

HIGH-SPEED RANGE OUTPUT
(CONTROLLER COMMAND)

on

off

0

LOW-SPEED RANGE OUTPUT
(CONTROLLER COMMAND)

on

off

max

min

COMMAND PRESSURE OF ELECTROMAGNETIC
PROPORTIONAL PRESSURE-REDUCING VALVE

TIME

## FIG.4

```
                    START

                         #1
              SHIFT LEVER SHIFTED          NO
                    DOWN?

                                                        #3
                     YES
                                          SHIFT LEVER AT          NO
                              #2          AUTOMATIC TRAVEL
                                             POSITION?
    NO
         VEHICLESPEED ≦ PERMISSIBLE
                  SPEED?                        YES

                                                         #4
                     YES

                            VEHICLE SPEED ≦ PERMISSIBLE     NO
                                    SPEED OBTAINED
                                  FROM RELATIONSHIP?

                                              YES
                                                        #5
                              OUTPUT SHIFT-DOWN
                              COMMAND TO TRANSMISSION

                                                        #6
                          INCREASE COMMAND SIGNAL TO
                          ELECTROMAGNETIC PROPORTIONAL
                              PRESSURE-REDUCING
                          VALVE FOR SPECIFIED PERIOD

                                    RETURN
```

FIG.5A

FIG.5B

FIG.5C

# FIG.6

SHIFT LEVER DEVICE — 58

POWER SOURCE

62a

62

COMMAND SWITCHING PORTION — 62c

62b

60

37

36f,36b

ABNORMALITY JUDGING UNIT — 64

WARNING DEVICE — 55

TRANSMISSION OPERATING UNIT — 66

TRANSMISSION — 28

EP 1 610 040 B1

## FIG.7

```
                    ( START )
                        |
                        | S1
                        v
               /  SHIFT LEVER  \        NO
               <  AT FORWARD    >-------------------------+
               \  POSITION?    /                          |
                        |                                  v
                     YES|                           S6
                        |                    /  SHIFT LEVER  \     NO
                        |                    <  AT BACKWARD   >--------+
                        |                    \  POSITION?    /         |
                        |                            |                  |
                  S2    v                         YES|   S7             |
            +-------------------+          +-------------------+        |
            |    GENERATE       |          |    GENERATE       |        |
            | SIGNAL TO EXCITE  |          | SIGNAL TO EXCITE  |        |
            |   SOLENOID 36f    |          |   SOLENOID 36b    |        |
            +-------------------+          +-------------------+        |
                        |                            |                  |
                  S3    v                      S8    v                  |
        NO      /   SIGNAL   \         NO     /   SIGNAL   \            |
    +-----------<  INPUTTED   >    +-----------<  INPUTTED   >          |
    |          \ TO SOLENOID /     |          \ TO SOLENOID /           |
    |           \    36f    /      |           \    36b    /            |
    |                |YES          |                |YES                |
    |                |             |                |                   |
    |                +-------------+                +-------------------+
    |                                                |
    v         S5                                     v      S4
+-------------------+              +-------------------------------+
| NEUTRAL COMMAND   |              |    COMMAND C.T. SHIFT         |
| TO TRANSMISSION 28|              |       POSITION                |
+-------------------+              |  TO TRANSMISSION 28           |
    |                              +-------------------------------+
    |                                              |
    +----------------------------------------------+
                                                   |
                                                   v
                                              ( RETURN )
```

# FIG.8

POWER SOURCE — 62

62a

62c

62b

COMMAND SWITCHING PORTION

SHIFT LEVER DEVICE — 58

60

37

36f,36b

59

55

ABNORMALITY JUDGING UNIT — 64

WARNING DEVICE — 55

TRANSMISSION OPERATING UNIT — 66

TRANSMISSION — 28

EP 1 610 040 B1

# FIG.9

```
                    ┌─────────────┐
                    │    START    │
                    └──────┬──────┘
                           │
                          S1
                    ╱───────────╲
                   ╱ SHIFT LEVER ╲   NO
                   ╲ AT FORWARD   ╱──────────┐
                    ╲ POSITION?  ╱           │
                     ╲─────────╱             S6
                        │YES          ╱───────────╲
                        │            ╱ SHIFT LEVER ╲  NO
                        │            ╲ AT BACKWARD  ╱──────┐
                        │             ╲ POSITION?  ╱       │
                        │              ╲─────────╱         │
                        │                 │YES             │
                       S2                 S7               │
              ┌─────────────────┐  ┌─────────────────┐     │
              │    GENERATE      │  │    GENERATE      │    │
              │ SIGNAL TO EXCITE │  │ SIGNAL TO EXCITE │    │
              │  SOLENOID 36f    │  │  SOLENOID 36b    │    │
              └────────┬─────────┘  └────────┬─────────┘    │
                       │                     │              │
                      S3'                   S8'             │
             NO ╱───────────╲      NO ╱───────────╲         │
          ┌────╲  FORWARD    ╱    ┌───╲  FORWARD    ╱        │
          │     ╲ PRESSURE  ╱     │    ╲ PRESSURE  ╱         │
          │      ╲SWITCH ON?╱     │     ╲SWITCH ON?╱         │
          │       ╲───────╱       │      ╲───────╱          │
          │        │YES           │       │YES              │
          │        └──────────┐   │       │                 │
          │                   │   │       │                 │
          │◄──────────────────┼───┘       ▼                 │
          │                   └──────────►│◄────────────────┘
          │                              S4
          S5                    ┌─────────────────┐
   ┌─────────────────┐          │ COMMAND C.T. SHIFT│
   │ NEUTRAL COMMAND │          │    POSITION      │
   │ TO TRANSMISSION 28│        │ TO TRANSMISSION 28│
   └────────┬─────────┘         └────────┬─────────┘
            │                            │
            └──────────────────►─────────┤
                                         │
                                    ┌────▼─────┐
                                    │  RETURN  │
                                    └──────────┘
```

# FIG.10

TO OPERATION
CIRCUIT

# FIG.11

HIGH-SPEED RANGE | A | B | LOW-SPEED RANGE

GEAR CHANGE TRANSITION PERIOD

INCREASE PUMP CAPACITY

C

ENGINE SPEED Ne

D

Hi

Lo

PUMP CAPACITY Dp

max

0

PUMP TAKE-UP FLOW RATE Qp

max

0

SPEED ROTATING SPEED Nm

max

0

MOTOR DISCHARGE FLOW RATE Qm

max

0

CHARGE PUMP RELIEF PRESSURE

CIRCUIT PRESSURE P

DECELERATION RATE a

VEHICLE SPEED V

max

HIGH-SPEED RANGE OUTPUT (CONTROLLER COMMAND)

on

off

0

LOW-SPEED RANGE OUTPUT (CONTROLLER COMMAND)

on

off

max

min

TIME

OUTPUT TO ELECTROMAGNETIC VALUE

39

# FIG.12

EP 1 610 040 B1

TO OPERATION
CIRCUIT

# FIG.13

SHIFT LEVER DEVICE — 58

60

62

POWER SOURCE

62a

62c    62b

COMMAND SWITCHING PORTION

37    36f,36b

ABNORMALITY JUDGING UNIT — 64

WARNING DEVICE — 55

BYPASS OPERATING UNIT — 68

BYPASS SWITCHING VALVE — 72

EP 1 610 040 B1

# FIG.14

```
              ┌─────────┐
              │  START  │
              └────┬────┘
                   │
                   ▼        S1
              ╱─────────╲
             ╱   SHIFT    ╲      NO
            ╱  LEVER AT     ╲──────────────┐
            ╲   FORWARD     ╱               │
             ╲  POSITION?  ╱                ▼         S6
              ╲─────────╱               ╱─────────╲
                   │                   ╱   SHIFT    ╲      NO
                  YES                 ╱  LEVER AT     ╲────────┐
                   │                  ╲  BACKWARD     ╱        │
                   │                   ╲  POSITION?  ╱         │
                   │                    ╲─────────╱            │
                   │                         │                 │
                   ▼         S2             YES                │
            ┌─────────────┐                  │                 │
            │  GENERATE   │                  ▼         S7      │
            │ SIGNAL TO   │           ┌─────────────┐          │
            │   EXCITE    │           │  GENERATE   │          │
            │ SOLENOID 36f│           │ SIGNAL TO   │          │
            └──────┬──────┘           │   EXCITE    │          │
                   │                  │ SOLENOID 36b│          │
                   ▼         S3       └──────┬──────┘          │
      NO      ╱─────────╲                    │                 │
    ┌─────────╲  SIGNAL  ╱            ╱─────────╲     S8        │
    │          ╲INPUTTED ╱      NO   ╱  SIGNAL   ╲              │
    │           ╲ TO     ╱    ┌──────╲ INPUTTED  ╱             │
    │            ╲SOLENOID    │       ╲ TO       ╱              │
    │             ╲  36f ╱    │        ╲SOLENOID╱               │
    │              ╲───╱      │         ╲ 36b ╱                │
    │               YES       │          ╲─╱ YES                │
    │                └────────┘           │                     │
    │                                     │                     │
    ▼         S5'                         ▼                     │
┌─────────────────┐                                            │
│ INPUT EXCITATION │                                           │
│ SIGNAL TO BYPASS │                                           │
│ SWITCHING VALVE  │                                           │
│       72         │                                           │
└────────┬─────────┘                                          │
         │                                                     │
         └──────────────┐                                      │
                        ▼                                      │
                   ┌─────────┐                                 │
                   │ RETURN  │◄────────────────────────────────┘
                   └─────────┘
```

# FIG.15A

FORWARD

# FIG.15B

START

S11

SHIFT LEVER
AT FORWARD
POSITION?

NO

YES

S13

SHIFT LEVER
AT BACKWARD
POSITION?

NO

S12

EXCITE ONLY
SOLENOIDS
82a, 84b

S14

EXCITE ONLY
SOLENOIDS
82b, 84b

YES

S15

EXCITE ONLY
SOLENOIDS
84a

RETURN

# FIG.16A

FORWARD

# FIG.16B

START

S11

SHIFT LEVER
AT FORWARD
POSITION?

NO

S13

YES

SHIFT LEVER
AT BACKWARD
POSITION?

NO

S12'

S14'

S15'

YES

EXCITE ONLY
SOLENOIDS
86a, 88b

EXCITE ONLY
SOLENOIDS
86b, 88a

EXCITE ONLY
SOLENOIDS
86a, 88a

RETURN

# FIG.17

FORWARD →

EXHAUST BRAKE SIGNAL

CONTROLLER

EP 1 610 040 B1

# FIG.18

PUMP CAPACITY

COMMAND PRESSURE

ENGINE SPEED

# FIG.19

CIRCUIT PRESSURE

HIGH

LOW

Pa

Pb

MOTOR CAPACITY
COMMAND PRESSURE

HIGH

LOW

MIN ← MOTOR CAPACITY → MAX

# FIG.20

```
        ( START )
            │
            ▼
        ╱S101╲
   ╱ AUXILIARY BRAKING ╲  NO
   ╲   SWITCH ON?      ╱ ──────────┐
        ╲    ╱                      │
         YES                        │
          │                         │
          ▼                         │
      ╱S102╲                        │
  ╱ DECREASING RATE OF ╲   NO       │
 ╱  OPERATED AMOUNT OF  ╲ ──────────┤
 ╲ ACCELERATOR ≧ SET VALUE? ╱       │
      ╲          ╱                  │
        YES                         │
         │                          │
         ▼                          ▼
   ┌──────────────┐          S104  ┌──────────────┐
   │OUTPUT COMMAND│               │               │
S103│   SIGNAL TO  │               │ OUTPUT NORMAL │
   │   INCREASE   │               │CONTROL SIGNAL │
   │MOTOR CAPACITY│               │               │
   └──────────────┘               └──────────────┘
         │                                │
         ▼◄───────────────────────────────┘
     ( RETURN )
```

# FIG.21

# FIG.22

START

S201

TANK OIL TEMPERATURE ≧ REFERENCE VALUE? → NO

YES

S203

TANK OIL TEMPERATURE ≧ SET VALUE? → NO

YES

S205

PUMP INCREASED TO LARGE EXTENT LAST TIME? → NO

YES

S202

INCLINE OPERATION PUMP TO LARGE EXTENT

S204

INCLINE OPERATION PUMP TO SMALL EXTENT

RETURN

# FIG.23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06265013 B

- JP H05248511 B